# FASCICULE DE BREVET EUROPEEN

(11) **EP 1 902 295 B1**
(45) Date de publication et mention de la délivrance du brevet: **28.04.2010**
(21) Numéro de dépôt: 06764152.2
(22) Date de dépôt: 12.07.2006
(51) Int. Cl.: G01N 1/38, B01F 13/00, B01F 11/00, G01N 35/00

(54) **MELANGE ET DISTRIBUTION HOMOGENES D'UN REACTANT SUR UNE SURFACE**
MISCHEN UND VERTEILEN HOMOGENER VERBINDUNGEN EINES REAKTANDEN AUF EINER OBERFLÄCHE
MIXING AND DISPENSING HOMOGENEOUS COMPOUNDS OF A REACTANT ON A SURFACE

(30) Priorité: 12.07.2005 FR 0552169
(43) Date de publication de la demande: 26.03.2008
(73) Titulaire: Biotray, 69007 Lyon (FR)
(72) Inventeur: DUGAS, Vincent, F-69330 Meyzieu (FR); BROUTIN, Jérôme, F-69007 Lyon (FR); SOUTEYRAND, Eliane, F-41190 Chambon sur Cisse (FR)
(74) Mandataire: Cabinet Plasseraud
(86) Numéro de dépôt international: PCT/EP2006/064160
(87) Numéro de publication internationale: WO 2007/006800

(56) Documents cités:
- EP-A- 1 346 770
- US-A1- 2003 013 184
- US-A1- 2003 096 423
- US-A1- 2004 248 125

## Description

### DOMAINE DE L'INVENTION

L'invention se rapporte au domaine des appareils automatiques pour l'optimisation de réactions sur des surfaces. En particulier, l'invention concerne un procédé de mélange et de distribution homogènes sur une surface, d'au moins un réactant porté par un fluide porteur en écoulement laminaire, ainsi qu'une cellule pour la mise en oeuvre de ce procédé.

L'invention concerne également un appareil automatique permettant de réaliser des réactions biologiques, bio-chimiques et chimiques de façon homogène et reproductible sur une surface plane ou poreuse.

### CONTEXTE DE L'INVENTION

Les domaines de la génomique et de la post-génomique sont actuellement en plein essor. Ceci est intiment lié au développement de nouveaux outils d'analyse à haut débit. Les biopuces (ADN, protéine, aptamères, etc..) font partie de ces puissants outils d'analyse. Les biopuces comprennent un support sur lequel sont localisées et immobilisées des molécules biologiques ou chimiques (de quelques dizaines à plusieurs milliers par cm²). Ces molécules, usuellement appelées "sondes", ont la capacité de reconnaître spécifiquement des molécules en solution. Chaque sonde à la capacité d'interagir de façon plus ou moins spécifique et plus ou moins forte avec une autre molécule biologique ou chimique appelée "cible".

Les interactions mises en jeu sont diverses. On notera, de façon non exhaustive : les réactions d'hybridation entre deux séquences d'acides nucléiques complémentaires (puces à ADN, technique de Fluorescence InSitu Hybridisation (FISH), etc), l'affinité d'acides nucléiques avec des protéines, des nucléotides, des médicaments et des marqueurs organiques (appelés aptamères), les interactions que peuvent établir les protéines (réactions immunologiques, réactions enzymatiques, réactions catalytiques, metal binding peptide "peptide fixant un métal", etc.).

Ces techniques permettent de cribler une grande quantité de molécules différentes de façon simultanée. Elles sont indispensables pour la génération de nouvelles sources d'informations pour les biologistes. En effet, les informations biologiques permettant de décrypter des motifs moléculaires associés à une pathologie, de déterminer le niveau d'expression des gènes en réponse à un stress (toxicologie notamment) ou bien de rechercher des polymorphismes liés à des maladies génétiques ne seront obtenues qu'à l'aide de ces telles plateformes de criblages multiples, parallèles et simultanés.

Un autre facteur à prendre en compte est celui de la sensibilité des tests. En effet, les produits biologiques (par exemple les acides nucléiques, les protéines, molécules organiques etc.) sont extraits en quantités infinitésimales. Pour optimiser la sensibilité et la durée d'analyse, on cherche à miniaturiser les dispositifs d'analyse. Par exemple, on connaît des puces ADN dans lesquelles plusieurs centaines de milliers de sondes sur 1 cm² sont immobilisées. Un concept en pleine expansion dans le domaine des micro et nano-technologies est le laboratoire sur puce (ou en anglais, "lab-on-chip").

Beaucoup d'efforts ont donc été consacrés depuis quelques années à la fabrication de ces dispositifs. Cependant peu de tests sont utilisés en routine dans les laboratoires de biologie. La « jeune » technologie des biopuces, par exemple, souffre d'un manque de fiabilité et reproductibilité. A l'heure actuelle, seul un exemple de puce a reçu la certification CE-IVD (AmpliChip(TM) CYP450, Roche). L'utilisation des puces pour le diagnostique moléculaire et génétique en laboratoire clinique implique, d'une part, une standardisation et une fiabilisation des résultats, et d'autre part, elle doit permettre des analyses à haut débit.

Pour cela, toutes les étapes, de la fabrication du support à la lecture des puces et aux traitements des données, doivent être fiabilisées. Une abondante littérature traite de la maîtrise des procédés d'élaboration des microréseaux (en anglais, "microarrays"), des différentes méthodes d'obtention des brins cibles dans le cas de l'hybridation d'acides nucléiques, ainsi que du traitement des données. Cependant, peu d'études relatent l'impact de l'étape d'hybridation sur les résultats biologiques.

Deux paramètres semblent importants : l'uniformité de l'hybridation sur l'ensemble du support et l'automatisation du procédé. Pour atteindre une excellente homogénéité, il est indispensable de donner à chaque cible en solution la même probabilité de « voir » toutes les sondes fixées sur le support. Les quantités massives d'analyses nécessaires dans le cadre de maladies génétiques (pour le dépistage par exemple) imposent d'avoir des outils automatiques. Cet aspect est important car il permet d'améliorer et de garantir une bonne répétabilité et reproductibilité des expériences diminuant par là même les multiples sources de variations.

Les puces apparaissent comme de puissants outils d'analyses puisque l'on peut réaliser plusieurs centaines de réactions en parallèle sur le même support. Cependant, pour que toutes ces analyses soient comparables, il est nécessaire qu'elles soient soumises à la même réaction, à l'échelle de la sonde.

En laboratoire, les hybridations sur lame de verre sont couramment réalisées entre lame et lamelle (méthode dite d'hybridation passive). La solution d'hybridation est donc figée (statique) et ce type de procédure s'accompagne d'un certains nombre d'imperfections. En particulier, cette méthode conventionnelle d'hybridation est limitée par la diffusion des cibles dans le tampon d'hybridation à la surface du support sur lequel sont immobilisées les sondes (mouvement brownien uniquement).

Il s'avère que le fait d'introduire un mélange au sein des fluides peut avoir un effet positif sur les résultats d'hybridation. Plusieurs principes de micro-mélange associés aux puces à ADN ont été étudiés. L'idée est de s'affranchir de la diffusion moléculaire en provoquant un transfert de masse des molécules d'ADN.

Une première approche repose sur la migration des molécules d'ADN chargées sous l'action d'un champ électrique (Edman et al. (1997) "Electric field directed nucleic acid hybridization on microchips" Nucleic Acids Res. 25(24) :4907-14). Cette méthode a donné des résultats 30 à 40 fois supérieurs à une méthode d'hybridation passive.

D'autres approches pour accélérer l'hybridation font appel à des transferts de masse par convection. Une première approche est basée sur la génération de cellules de convection via des ondes acoustiques (Liu et al. (2003) "Hybridization enhancement using cavitation microstreaming" Anal. Chem. 75(8) :1911-7). Le micro-mélange est généré directement dans la solution à la surface de la lame sans introduire de volumes morts. Il a été démontré que cette méthode améliore l'intensité du signal d'hybridation et la cinétique d'un facteur 5 par rapport à une hybridation statique. Les auteurs indiquent un gain en homogénéité sans résultats chiffrés.

L'alternative consiste à créer une agitation mécanique. Ces systèmes micro-fluidiques (McQuain et al. (2004) "Chaotic mixer improves microarray hybridization" Anal Biochem. 325(2) :215-26) s'avèrent difficiles à mettre en oeuvre malgré la simplicité du principe. Comparée à une méthode statique, cette méthode augmente de 2 à 8 fois les performances de l'hybridation selon la densité des sondes, la concentration des cibles et le volume de tampon d'hybridation. McQuain et al. (voir également WO-A-03/06547) ont développé un système d'agitation sur lame de verre basé sur le principe de l'advection chaotique. Ils énoncent une amélioration de l'uniformité du signal proche de l'uniformité de l'immobilisation des sondes sur le support (coefficient de variation de 19%) et un facteur de 2 comparé à un mode statique.

Ces techniques requièrent, pour certaines, des supports particuliers (plateforme nanogen) ou bien des transducteurs coûteux. De plus, ces systèmes ne sont pas intégrés dans des systèmes automatisés, ce qui ne permet pas de garantir l'utilisation de faibles volumes réactionnels (comparables aux systèmes entre lame et lamelle 40-50µL). Ces techniques abordent davantage le problème de l'hybridation selon un aspect cinétique et délaissent pour la plupart les aspects d'automatisation et d'uniformité de l'hybridation à l'échelle de la puce.

Au contraire, d'autres équipes travaillent sur l'accès des puces à ADN pour l'analyse de masse. Les techniques actuellement utilisées dans ce type de test sont des plaques à puits. Cependant chaque puits consomme un volume important de matériel biologique et l'homogénéité n'est pas assurée du fait de l'absence d'agitation contrôlée au sein du puits.

Il existe un certain nombre de stations commerciales d'hybridation permettant de réaliser des hybridations automatiques. Les volumes mis en jeu sont très importants (supérieurs à 200µL). La plupart de ces stations effectuent des mouvements "drain and fill" (vidange et remplissage) de liquide au regard de la surface, qui aboutissent à un flux laminaire selon des voies préférentielles. Cela s'accompagne d'une non-uniformité des zones de réaction. McQuain et al. a démontré l'importance de créer une agitation homogène. Il est donc important de contrôler la façon de réaliser le mélange.

Il a été proposé d'utiliser des lames de microscope, standardisées et peu coûteuses, et de réaliser un mélange des fluides par advection chaotique. Les flux de liquide à l'intérieur d'une chambre réactionnelle micro-fluidique (épaisseur de chambre inférieur à 100µm) suivent des écoulements laminaires (nombre de Reynolds très faible). De ce fait le mélange s'opère mal au sein d'une micro-chambre : le premier principe consiste à introduire une variation temporelle de l'écoulement. Ceci est réalisé en injectant le fluide à différents endroits de façon périodique au cours du temps. De plus, dans ce type d'écoulement bidimensionnel périodique en temps, certaines régions du fluide peuvent résister à l'apparition de chaos. L'introduction d'une tridimensionnalité de l'écoulement, au niveau des injections, permet alors d'éliminer ces zones mortes et de favoriser le mélange sur toute la surface de la lame. Des simulations montrent que, par cette méthode de mélange par advection chaotique, la couche de diffusion des cibles est diminuée, ce qui permet de miniaturiser le dispositif et de l'appliquer aux puces de diagnostiques ("bio-chips"), dans le cadre d'une détection haut débit.

Document US-A-2004 24 81 25 décrit un procédé selon le préambule de la revendication 1, et une cellule selon le préambule de la revendication 10.

### OBJECTIFS DE L'INVENTION

L'objectif de l'invention est de pallier les carences des dispositifs de l'art antérieur. En particulier, il s'agit de fiabiliser la technique d'hybridation, et plus généralement, le mélange et la distribution homogènes sur une surface, d'au moins un réactant porté par un fluide porteur. Un objectif de l'invention est de développer un outil automatique haut débit, à cet effet.

Un autre objectif est de proposer un procédé de mélange et de distribution homogènes sur une surface, d'au moins un réactant porté par un fluide porteur, qui exploite le phénomène d'advection chaotique généré dans un flux laminaire.

Un autre objectif de l'invention est de proposer un outil automatique pour déposer un revêtement chimique, biochimique ou encore polymère, sur une surface plane ou poreuse, dont l'épaisseur et l'homogénéité sont contrôlées de façon reproductible.

Un objectif de l'invention est de développer un procédé en vue de l'amélioration de l'homogénéité et de la reproductibilité de la réaction chimique, biochimique et biologique sur l'ensemble d'une surface de réaction.

Un autre objectif est de développer une cellule de mélange et de distribution homogènes sur une surface, d'au moins un réactant porté par un fluide porteur, dans laquelle la variabilité de la réaction entre deux points de la surface de réaction, est réduite.

Un objectif complémentaire de l'invention est de fournir un procédé et un dispositif, utiles en particulier dans le cas du diagnostic -les "bio-chips"- dont la fabrication et l'utilisation sont relativement peu onéreuses.

Encore un autre objectif de l'invention est de proposer un procédé réversible, en ce sens qu'il puisse être possible de séparer les réactants de la surface de réaction.

Le cahier des charges d'un outil automatique implique :
- de travailler avec un volume de liquide le plus faible possible : pour une surface unitaire le volume de liquide est déterminé par l'épaisseur de liquide au regard de la surface ;
- d'agiter les réactifs en solution afin d'améliorer la distribution de ces réactifs vis-à-vis de la surface, pour obtenir une concentration homogène sur la surface ;
- de créer une circulation homogène du liquide sur la surface, pour éviter l'apparition de zones "mortes" ;
- de contrôler la température de réaction ;
- d'acheminer de façon automatique plusieurs liquides ;
- de vider le dispositif de façon automatique ;
- de pouvoir injecter directement dans le dispositif réactionnel n'importe quel type de réactifs à n'importe quel moment.

Un autre objectif est de proposer un appareil d'analyse permettant de détecter l'état d'avancement de la réaction, afin d'optimiser la durée de la réaction, aussi bien dans le cas d'une réaction de reconnaissance cible-sonde, que dans le cas de la formation d'un revêtement, sur une surface de réaction.

Un objectif supplémentaire de l'invention est de proposer un appareil d'analyse d'un échantillon, par exemple biologique. Un autre objectif est de fournir un appareil de contrôle de la qualité d'un revêtement sur une surface de réaction.

### BREVE DESCRIPTION DE L'INVENTION

Il est du mérite des inventeurs d'avoir développé, d'une part, un procédé, et d'autre part, une cellule, pour mélanger et distribuer de façon homogène sur une surface, au moins un réactant porté par un fluide porteur. En particulier, une telle cellule peut être intégrée dans divers appareils, notamment un appareil de reconnaissance chimique et/ou biochimique de type sonde-cible, un appareil pour former un film homogène sur une surface, eux-mêmes susceptibles de comprendre des moyens de détection du déroulement des réactions.

Afin de mettre en place cette technologie, les inventeurs ont réalisé un système fluidique équipé d'une chambre d'hybridation automatisée permettant de mettre en oeuvre une méthode basée sur le principe de l'advection chaotique au sein de la chambre.

Ainsi, l'invention telle que définie dans les revendications, concerne en premier lieu un procédé selon la revendication 1 de mélange et de distribution homogènes sur une surface, d'au moins un réactant porté par un fluide porteur en écoulement laminaire, comprenant les étapes essentielles suivantes :
a) on prévoit une chambre réactionnelle pourvue :
   - d'au moins une surface de réaction sur laquelle le réactant est susceptible de se fixer, directement ou indirectement, éventuellement de façon réversible,
   - d'au moins trois ports d'entrée/sortie de fluide, et
   - d'au moins un réservoir dont le volume est fixe, le réservoir de volume fixe étant apte à communiquer d'une part, avec la chambre réactionnelle, et d'autre part, avec l'extérieur de la chambre réactionnelle par l'intermédiaire d'un port d'injection ;
b) éventuellement, on ferme ou on maintient fermé hermétiquement le port d'injection des réservoirs de volume fixe, puis on introduit dans la chambre réactionnelle au moins un fluide autre que le fluide porteur contenant le réactant, par l'intermédiaire d'au moins un port d'entrée/sortie de la chambre réactionnelle ;
c) on injecte le fluide porteur contenant le réactant dans au moins l'un des réservoirs de volume fixe ;
d) on fait circuler le fluide porteur contenant le réactant entre le réservoir de volume fixe, la chambre réactionnelle et un réservoir de volume variable apte à communiquer indépendamment avec la chambre réactionnelle par l'intermédiaire de chacun des ports d'entrée/sortie de la chambre réactionnelle ;
e) on répète l'étape d) en sélectionnant successivement les différents ports d'entrée/sorties ;
f) éventuellement, on répète les étapes b) et/ou c) et/ou d) et/ou e).

Avantageusement, pour la mise en oeuvre de ce procédé, les inventeurs ont développé une cellule selon la revendication 10 pour mélanger et pour distribuer de façon homogène sur une surface, au moins un réactant porté par un fluide porteur en écoulement laminaire, comprenant :
- une chambre réactionnelle pourvue :
   - d'au moins une surface de réaction sur laquelle le réactant est susceptible de se fixer, directement ou indirectement, éventuellement de façon réversible,
   - d'au moins trois ports d'entrée/sortie de fluide, et
   - d'au moins un réservoir dont le volume est fixe, le réservoir de volume fixe étant apte à communiquer d'une part, avec la chambre réactionnelle, et d'autre part, avec l'extérieur de la chambre réactionnelle par l'intermédiaire d'un port d'injection muni de moyens de fermeture hermétique,
- une boucle fluidique comprenant au moins un port d'alimentation, au moins un port d'extraction et au moins un réservoir dont le volume est variable, le réservoir de volume variable étant apte à communiquer indépendamment avec la chambre réactionnelle par l'intermédiaire de chacun des ports d'entrée/sortie ;
- des moyens de mise en circulation des fluides dans la chambre réactionnelle et dans la boucle fluidique.

Le procédé et la cellule selon l'invention satisfont aux principales contraintes du cahier des charges mentionné ci-dessus. En effet, ils permettent de développer un mélange par advection chaotique au sein du film de liquide porteur au contact de la surface de réaction. Ainsi, le liquide porteur, et donc les réactants qu'il porte, sont distribués de façon homogène sur toute la surface de réaction. En d'autres termes, tous les points de la surface de réaction sont équivalents : il n'existe pas de flux préférentiels de fluide porteur, au niveau de la surface de réaction.

Par exemple, dans le cas d'une réaction de reconnaissance sonde-cible (par exemple par hybridation), chaque cible a la même probabilité de voir les sondes immobilisées sur la surface de réaction. Dans le cas de la formation d'un revêtement, les réactants destinés à former le revêtement sont répartis de façon homogène sur toute la surface de réaction à revêtir.

### BREVE DESCRIPTION DES FIGURES

La figure 1 représente une vue en perspective isométrique d'un dispositif automatique d'hybridation.

La figure 2 représente une vue d'ensemble des éléments internes du dispositif de la figure 1.

La figure 3 représente une vue en perspective isométrique de la cellule d'hybridation ouverte du dispositif de la figure 1.

La figure 4 représente le couvercle de la chambre d'hybridation vu de dessous.

La figure 5 représente une vue en coupe de la chambre appliquée sur une lame de microscope, selon la ligne V de la figure 4.

La figure 6 représente une vue en coupe de la cellule d'hybridation du dispositif, selon la ligne VI de la figure 2.

La figure 7 représente un schéma fluidique du dispositif.

La figure 8 représente le schéma de principe du dispositif, vu en perspective.

La figure 9 illustre le remplissage de la boucle fluidique (9A : boucle vide ; 9B et 9C : amorçage de la boucle fluidique).

La figure 10 illustre l'injection d'un échantillon biologique (10A : injection ; 10B : évacuation de l'excédent de fluide; 10C: transfert de l'échantillon dans la chambre réactionnelle)

La figure 11 illustre plusieurs étapes successives possibles de la phase de mélange.

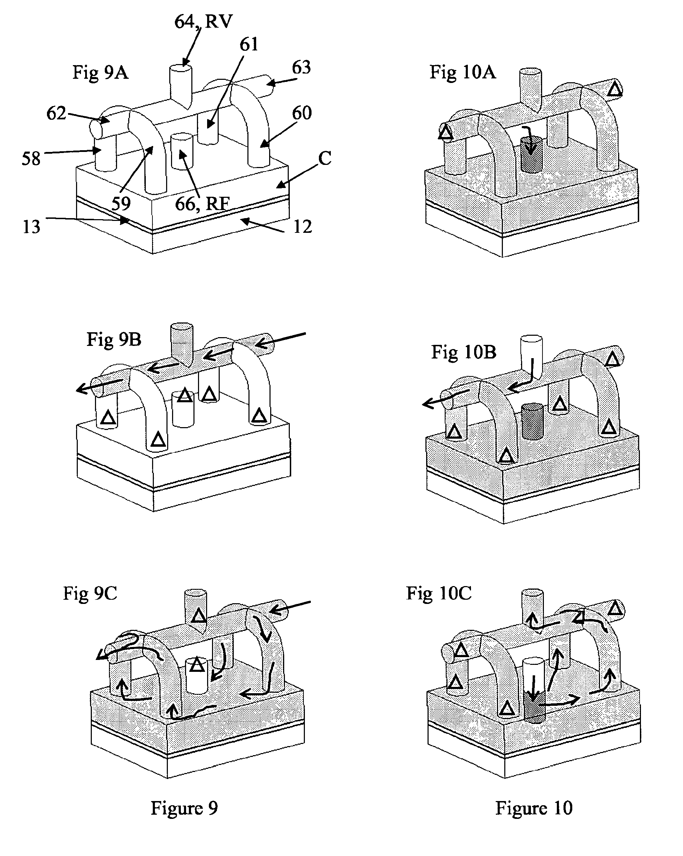

Dans les figures 9, 10 et 11, les flèches indiquent le sens de circulation des fluides et le figuré Δ indique que la vanne correspondante est bloquante.

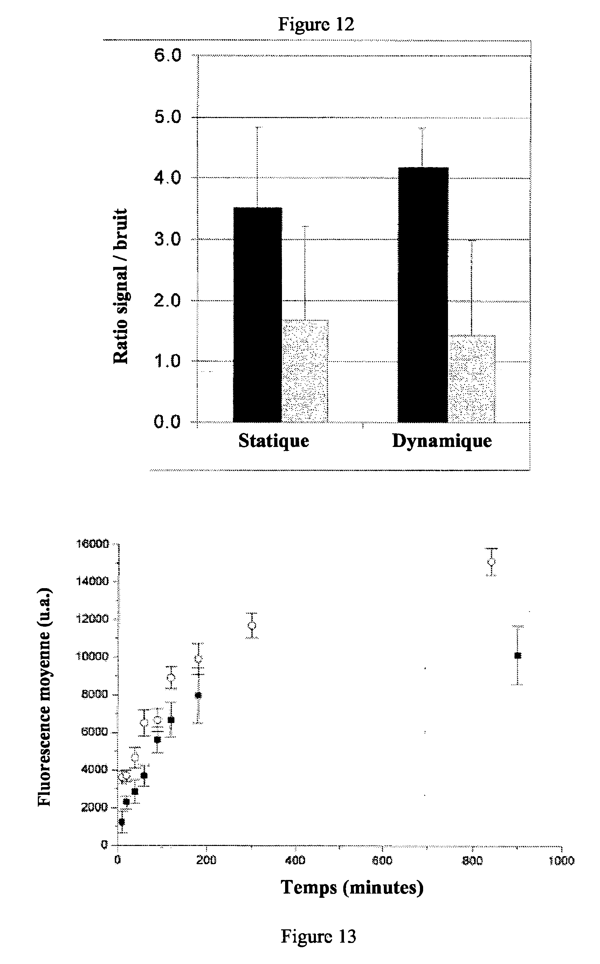

La figure 12 est un graphique représentant le rapport signal/bruit (SNR) pour deux types de sondes présentant un polymorphisme de nucléotide simple, et dans deux techniques d'hybridation (technique entre lame et lamelle, comparée à la technique dynamique de mélange chaotique selon l'invention), comme expliqué dans les exemples (rapport signal/bruit ; figuré noir : allèle a ; figuré grisé : allèle b).

La figure 13 illustre la cinétique globale d'hybridation pour les hybridations statique et dynamique, comme expliqué dans les exemples (fluorescence moyenne [unité arbitraire, u.a.] en fonction du temps [min] ; carré noir : hybridation statique ; cercle : hybridation dynamique selon l'invention).

### DESCRIPTION DETAILLEE DE L'INVENTION

L'invention va maintenant être décrite en référence aux figures mentionnées ci-dessus, essentiellement dans le cas d'un appareil automatique d'hybridation sur puce à ADN. Bien entendu, d'autres types de reconnaissances moléculaires sont envisageables, par exemples choisis parmi les couples sonde/cible suivants : ADN/ADN, ADN/ARN, ARN/ARN, PNA/ADN, PNA/ARN, PNA/protéine, protéine/ADN, protéine/ARN, protéine/protéine, molécule chimique (ex. hormones, lipides, glycolipides, carbohydrate)/ protéine, molécule chimique/ ADN etc... (PNA : "peptidic nucleic acid" acide nucléique peptidique).

Bien entendu cette liste n'a rien de limitatif, étant donné que le problème que cherche à résoudre l'invention est celui de la distribution et du mélange homogènes sur une surface de réaction, d'au moins un réactant porté par un fluide porteur. Dans ce cas, on parlera de fixation indirecte du réactant -la cible- à la surface de réaction, par l'intermédiaire des sondes immobilisées sur ladite surface.

L'invention a également vocation à s'appliquer au dépôt de réactants pour former un film homogène chimique, biochimique ou polymère notamment, sur une surface de réaction, dont l'état de surface peut avoir été préalablement modifié pour améliorer le dépôt des réactants. Dans ce cas, le réactant peut être fixé directement ou indirectement à la surface de réaction, selon le cas d'espèce.

Par "fluide porteur" on désigne un fluide contenant les réactants, c'est-à-dire en particulier, le fluide qui est injecté dans la chambre réactionnelle par le port d'injection. Par ailleurs, la chambre réactionnelle contient généralement un fluide d'amorçage par exemple, avant l'injection du fluide porteur. Dès lors que le fluide d'amorçage et le fluide porteur injecté se mélangent, on désigne également le mélange par fluide porteur.

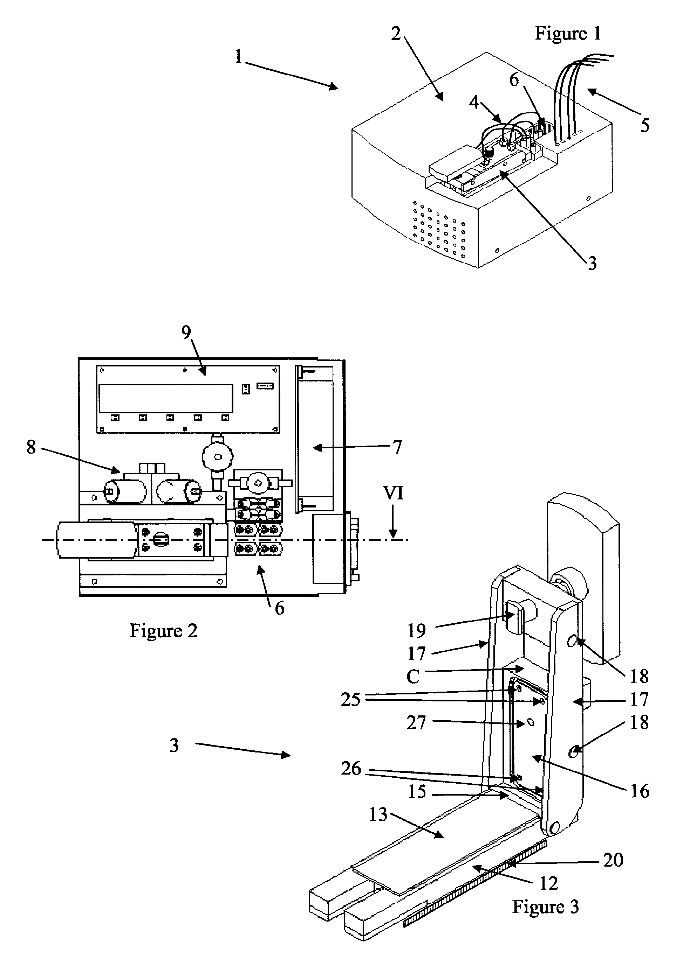

La figure 1 montre une vue en perspective isométrique d'un appareil automatique d'hybridation 1 pour hybridation sur puces à ADN au format lame de microscope. Cet appareil comprend un capot 2, par exemple en plastique, et une cellule d'hybridation 3 dans laquelle il est possible d'insérer tout type de lame de microscope (format 1 inchx3 inchx1 mm, soit 26 mm x 76 mm x 1 mm) sur laquelle ont été immobilisées des sondes biologiques. La cellule confine la surface à hybrider (surface de réaction sur laquelle sont immobilisées les sondes) dans une chambre réactionnelle de faible volume dans laquelle vont avoir lieu les opérations relatives à l'hybridation. Cette chambre est connectée via les tubes 4 à une boucle fluidique 6 illustrée à la figure 2. La boucle fluidique comprend des éléments micro-électro-fluidiques situés de préférence sous le capot 2. Ces éléments permettent de réaliser un mélange par advection chaotique dans la chambre réactionnelle.

Avantageusement, afin de contrôler les conditions de réaction, des moyens de régulation de température permettent de réguler la température de la cellule, dans la chambre de réaction et/ou dans la boucle fluidique. Il s'agit par exemple d'un ou plusieurs éléments chauffants ou d'une ou plusieurs cellules à effet Peltier.

La figure 2 montre également un système de distribution 8 qui permet de distribuer différentes solutions dans la boucle fluidique 6 afin de réaliser par exemple, des pré-hybridations, des hybridations et/ou des lavages. Les solutions sont acheminées jusqu'au système de distribution 8 via les tubes 5.

Les éléments électro-fluidiques de la boucle fluidique et le système de distribution sont contrôlés de préférence par des cartes de puissance 9 protégées par le capot. Les moyens de régulation de température ainsi que les cartes de puissance 9 sont alimentés par une alimentation 7 sous le capot qui convertit le courant alternatif du secteur, en courant continu 24V (le cas échéant).

Avantageusement, les cartes de puissances et les moyens de régulation de la température sont contrôlés par une carte électronique qui possède des entrées et sorties numériques et analogiques. Cette carte est montée sur un port PCI d'ordinateurs. Un logiciel pilote la carte qui envoie les informations vers l'appareil 1 via un câble connecté sur un port de communication. Bien entendu, d'autres types de ports de communication sont envisageables.

Comme indiqué ci-dessus, l'invention concerne une cellule 3 pour mélanger et pour distribuer de façon homogènes sur une surface 13, au moins un réactant porté par un fluide porteur en écoulement laminaire, comprenant :
- une chambre réactionnelle 16 pourvue :
   - d'au moins une surface de réaction 13 sur laquelle le réactant est susceptible de se fixer, directement ou indirectement, éventuellement de façon réversible,
   - d'au moins trois ports d'entrée/sortie 25, 26 de fluide, et
   - d'au moins un réservoir dont le volume est fixe, le réservoir RF de volume fixe étant apte à communiquer d'une part, avec la chambre réactionnelle 16, et d'autre part, avec l'extérieur de la chambre réactionnelle par l'intermédiaire d'un port d'injection 27 muni de moyens 28 de fermeture hermétique,
- une boucle fluidique 7 comprenant au moins un port d'alimentation 63, au moins un port d'extraction 62 et au moins un réservoir RV dont le volume est variable, le réservoir de volume variable RV étant apte à communiquer indépendamment avec la chambre réactionnelle par l'intermédiaire de chacun des ports d'entrée/sortie 25, 26 ;
- des moyens de mise en circulation des fluides dans la chambre réactionnelle et dans la boucle fluidique.

Avantageusement, comme cela sera précisé lors de la description du procédé selon l'invention, le volume du ou des réservoirs RF de volume fixe est supérieur ou égal au volume maximum du réservoir RV de volume variable.

De préférences, les ports d'entrée/sortie 25,26 de la chambre réactionnelle 16 sont disposés régulièrement sur la périphérie de la chambre réactionnelle. Cela permet notamment d'améliorer l'homogénéité du mélange et de la distribution du fluide porteur le long de la surface de réaction.

Selon un mode de mise en oeuvre préféré illustré aux figures 3 à 6, la chambre réactionnelle 16 est délimitée en haut, par un couvercle C muni desdits ports d'entrée/sortie 25,26, en bas par ladite surface de réaction 13 et latéralement par un joint d'étanchéité 22. Avantageusement, la face inférieure du couvercle C comprend une gorge périphérique 21 où est logée un joint d'étanchéité torique 22.

De préférence, la surface de réaction est la surface supérieure d'une pièce rapportée, par exemple une lame de microscope, la cellule comprenant en outre des moyens de positionnement de la pièce rapportée par rapport au couvercle C.

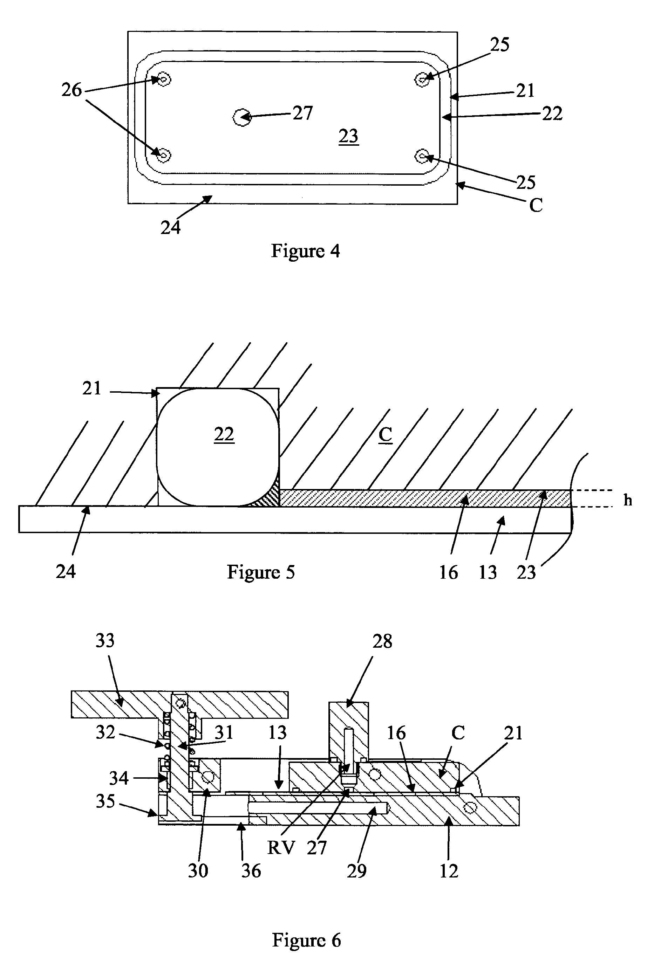

La figure 4 montre une vue de face d'un couvercle C qui constitue la partie supérieure de la chambre réactionnelle 16. Le couvercle C comprend une gorge rectangulaire 21 dans laquelle est logé un joint torique 22 en EPDM. La gorge 21 délimite une surface intérieure 23 rectangulaire (ici, de 50µm de profondeur) qui représente le haut de la chambre réactionnelle 16. Lorsque le couvercle C est appliqué sur la lame de microscope 13 comme le montre la figure 6, la surface extérieure 24 du couvercle, délimitée par la gorge 21 est plaquée sur la lame de microscope 13. Ainsi, quelle que soit l'épaisseur de la lame 13, la hauteur (h) de la chambre 16 ne varie pas. Lorsque la surface 24 est plaquée sur la lame 13, le joint torique est écrasé dans la gorge 21. Cela permet d'assurer l'étanchéité de la chambre 16. Dans cet exemple, la chambre comprend 4 ports d'entrée/sortie 25, 26 situées aux quatre coins de la chambre. Ces ports permettent de faire circuler le fluide porteur et les réactifs entre le réservoir de volume fixe RF et le réservoir de volume variable RV, le long de la surface de réaction. En outre, ces ports sont reliés à au moins un port d'alimentation et au moins un port d'extraction, qui permettent l'injection et l'extraction des solutions de réactifs, solutions de lavage, de décontamination, dans le dispositif. Un port d'injection 27 permet d'injecter le matériel biologique dans la chambre réactionnelle, à étape de fonctionnement du dispositif, depuis l'extérieur. Ce port d'injection 27 communique avec un réservoir de volume fixe RF. Un bouchon 28 (figure 6) permet de fermer hermétiquement le réservoir de volume fixe RF par rapport à l'extérieur, notamment pour les phases de vidange et de remplissage de la chambre réactionnelle 16.

La figure 3 montre une vue isométrique détaillée de la cellule 3 lorsqu'elle est ouverte. La cellule comprend un support 12 de lame de microscope, par exemple en fortal, sur lequel est posée une lame de microscope 13 munie d'un microréseau de sondes biologiques. La lame est positionnée dans le plan horizontal grâce à deux réglettes de butée 15 usinées sur le support 12. La cellule comprend 2 leviers 17 reliés au support 12 par un axe commun 18 qui assure une liaison pivot entre les leviers 17 et le support 12. le couvercle C est relié aux leviers 17 par un axe 18. Ce mécanisme permet d'appliquer le couvercle C de manière reproductible sur la lame de microscope avec une force uniformément répartie. Ainsi, cela diminue les risques de casse du support et cela garantit une excellente étanchéité. Un système de verrouillage 19 au bout des leviers 17 permet de verrouiller le système de manière reproductible avec une force suffisante. Un élément chauffant 20 du type thermofoil est collé sous le support 12 et permet de contrôler la température d'hybridation.

La figure 6 montre une vue en coupe de la cellule selon l'invention. Le perçage 29 dans le support 12 accueille une sonde qui permet de mesurer la température de la chambre réactionnelle 16 à proximité de la surface de réaction 13, afin de pouvoir réguler au mieux la température.

La figure 6 permet d'apprécier le système de verrouillage 19. Un arbre 31 coulisse dans la pièce 30 via un coussinet en polymère 34. L'arbre 31 est maintenu en place sur la pièce 30 grâce à la force d'un ressort 32 précontraint par la poignée 33. Pour verrouiller la cellule, il faut exercer une force sur la poignée 33 pour faire coulisser l'arbre 31 dans la pièce 30 puis il faut tourner la poignée 33 de 90° (par exemple) pour faire tourner l'arbre 31 d'un même angle. L'ergot 35 entre en appui sur la pièce 36 solidaire du support 12. De préférence, cette pièce 36 est fabriquée dans un métal plus dur que le matériau du support, pour limiter l'usure. Le système est alors verrouillé et la force du ressort 32 qui maintient le système 19 verrouillé, s'exerce sur le couvercle C via les leviers 17 et l'axe 18. Cette force est suffisante pour écraser le joint torique 22 afin que la surface 24 du couvercle 16 soit plaquée sur la lame de microscope. Les leviers 17 permettent de découpler la force à exercer sur la chambre pour permettre à un utilisateur de fournir cette force de manière plus confortable.

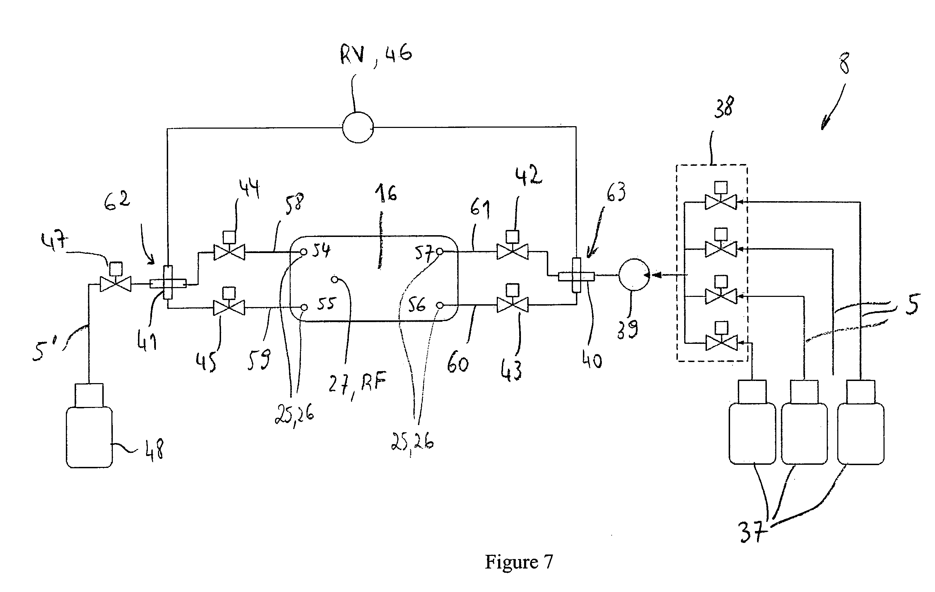

La figure 7 montre le schéma du système de distribution 8 et de la boucle fluidique 7 connectée à la chambre réactionnelle 16. Les solutions utilisées pour les opérations d'hybridation sont contenues dans des flacons 37. Les solutions sont acheminées via les tubes 5 vers une vanne de mélange 38 grâce à une pompe 39 placée en aval de la vanne. Il s'agit de préférence d'une pompe à membrane connectée à deux clapets anti-retour. Il peut également s'agir d'une valve solénoïde. La vanne de mélange 38 permet de sélectionner la solution à utiliser pour amorcer le système ou remplir la boucle fluidique. La sortie de la pompe 39 est reliée à la boucle fluidique via une croix fluidique 40. La boucle fluidique comprend quatre vannes 42, 43, 44, 45 reliées respectivement aux entrées/sorties 57, 56, 54, 55 de la chambre 16. Les vannes 42 et 43 sont reliées par la croix fluidique 40 à la sortie de la pompe 39 et à l'entrée de la pompe 46. Les vannes 44 et 45 sont reliées à une vanne 47 de sortie de la boucle et à la sortie de la pompe 46 par la croix fluidique 41. Une poubelle 48 est placée en aval de la vanne 47 de sortie de la boucle pour récupérer les solutions utilisées via un tube 5'.

Avantageusement, la pompe 46 se présente sous la forme d'une vanne solénoïde de volume variable, qui constitue le réservoir de volume variable RV.

Pour les phases de remplissage de la boucle fluidique incluant la chambre 16, on sélectionne la solution grâce à la vanne de mélange 38, et la pompe 39 achemine la solution jusqu'à l'entrée de la boucle. On ferme alors les vannes 42, 43, 44 et 45 et on ouvre la pompe 46 et la vanne 47. La pompe 39 fait alors circuler la solution vers la poubelle 48. Une première partie de la boucle fluidique est remplie. Pour remplir l'autre partie, il faut fermer la pompe 46 et ouvrir les vannes 42, 43, 44, 45 et 47, la pompe 39 fait alors circuler la solution vers la poubelle en faisant entrer la solution dans la chambre 16 par les ports d'entrée/sortie 57, 56 et en faisant sortir la solution par les ports d'entrée/sortie 54, 55. Pour remplir la deuxième partie de la boucle, il faut fermer le port d'injection de la chambre parce que la solution est poussée par la pompe 39. De la même façon, on peut vider la boucle fluidique en sélectionnant de l'air au lieu d'une solution.

Pour les phases de mélange, la pompe 39 est fermée, la vanne 47 est également fermée. En revanche le port d'injection 27 est ouvert ou éventuellement fermé. Le mélange est réalisé par une série de phases de circulation des fluides. Dans une première moitié de phase, la vanne 43 est ouverte et les vannes 44, 45 et 42 sont fermées. À l'état haut, la pompe 46 aspire la solution par son entrée et extrait la solution de la chambre 16 par le port d'entrée/sortie associé à la vanne 43, qui est ouverte, tandis que les autres vannes 44, 45 et 42 sont fermées. La chambre est toujours remplie parce que le volume de solution extrait est compensé par le volume de solution contenu dans le réservoir de volume fixe RF qui communique avec le port d'injection 27.

Puis, dans la seconde moitié de la phase, la vanne 44 est ouverte et les vannes 42, 44 et 45 sont fermées. La pompe passe de l'état haut à l'état bas. A l'état bas la pompe pousse la partie de solution aspirée à l'état haut et injecte la solution dans la chambre 16 via le port d'entrée sortie associé à la vanne 44, qui est ouverte, tandis que les autres vannes 42, 44 et 45 sont fermée. Une partie du volume de la chambre égale au volume déplacé par la pompe 46 est injectée dans le réservoir de volume fixe, par le port d'injection.

Le volume déplacé par la pompe 46 ne dépasse pas le volume du port d'injection afin qu'au cours de l'état haut il n'y ait pas d'air d'injecté dans la chambre, et donc dans la boucle. En effet, cela peut occasionner des pertes de charge et un mauvais mélange. De plus, cela évite qu'au cours de l'état bas la solution qui remplit la chambre ne sorte de la chambre par le port d'injection.

La pompe 46 va effectuer une série de pulses caractérisés par un état haut et un état bas, au cours desquels le port d'entrée/sortie relié à la pompe 46 pendant le passage de l'état haut à l'état bas de la pompe 46 puis de l'état bas à l'état haut, changera d'une phase à la suivante. En conséquence, le réservoir de volume variable peut communiquer avec la chambre réactionnelle de façon indépendante par l'intermédiaire de chacun des ports d'entrée/sortie.

Au cours du mélange il est possible d'injecter du matériel biologique dans le port d'injection 27 à condition de ne pas déborder à l'état bas.

De plus le port d'injection fonctionne comme un piège à bulles. En effet les solutions couramment utilisées pour l'hybridation contiennent des tensioactifs qui font qu'il est très difficile de les injecter sans bulles. Etant donné que le port d'injection est libéré, les bulles qui y entrent ne sont pas réinjectées dans la chambre.

Selon une caractéristique avantageuse de l'invention, la cellule est munie de moyens de détection des réactants fixés sur la surface de réaction. Par exemple, dans le cas d'une hybridation d'acide nucléiques, il peut s'agir d'un scanner de fluorescence.

De manière plus générale, on peut prévoir tout type de capteur susceptible de détecter la présente de réactants à une position donnée de la surface de réaction. Le capteur est relié à un dispositif d'analyse d'image par exemple, afin de déterminer les positions de la surface de réaction où un réactant s'est effectivement fixé. Dans le cas des microréseaux, où l'on fait intervenir une reconnaissance sonde-cible, on connaît les caractéristiques des sondes, ce qui permet de déduire les caractéristiques des cibles -les réactants fixés- et donc *in fine,* celles de l'échantillon analysé.

Par ailleurs, selon les conditions expérimentales et le type de capteur, l'analyse peut être qualitative (présence ou absence d'une cible), quantitative (quantité de cible présente, corrélée par exemple à une intensité de coloration ou de fluorescence), ou semi-quantitative (quantitative au dessus d'un certain niveau de détection, et qualitative en dessous de ce niveau de détection).

On peut ainsi disposer d'un outil d'analyse dynamique. Par exemple, on réalise les réactions d'hybridation, ou plus généralement de reconnaissance sonde-cible, en répétant des phases de mélange et de distribution du fluide porteur sur la surface de réaction, et simultanément on détecte la fixation de cibles sur la surface de réaction, à l'aide d'un capteur adéquat. Puis, lorsqu'on se rend compte que la situation entre deux détections/analyses n'évolue plus depuis un nombre de cycle prédéterminé, c'est-à-dire qu'on n'a pas détecté de nouvelle réaction de reconnaissance, on peut considérer que l'analyse est achevée. Cela permet de réduire la durée des analyses, puisque le nombre de cycle de mélange n'est pas fixé arbitrairement, mais en fonction de la situation effectivement mesurée.

L'analyse peut également porter sur l'homogénéité d'un revêtement. On peut par exemple mesurer la coloration de la surface de réaction après avoir procédé au dépôt d'un film chimique, biochimique et/ou polymérique. On peut également envisager de mesurer les variations de l'intensité d'un faisceau lumineux passant à travers le film et le support. Si la variabilité de l'intensité de ce faisceau lumineux est inférieure à un seuil prédéterminé, on pourra considérer par exemple que le film est homogène en épaisseur. Un étalonnage préalable permettra de connaître l'épaisseur de ce film.

Ainsi, on dispose d'un outil permettant de contrôler la qualité d'un revêtement sur un support tel qu'une lame de microscope.

C'est pourquoi l'invention concerne également un appareil pour mettre en oeuvre des réactions de reconnaissance chimique et/ou biochimique "cible-sonde", comprenant au moins une cellule conforme à l'invention, dans laquelle la surface de réaction de la cellule se présente sous la forme d'un microréseau de sondes spécifiques, préparé sur un support, de préférence une lame de microscope. Dans ce cas, le fluide porteur contient une pluralité de réactants "cibles" susceptibles de réagir spécifiquement avec les sondes du microréseau.

L'invention concerne également un appareil pour former un film homogène sur une surface, comprenant au moins une cellule conforme à l'invention.

De préférence, ces appareils comprennent un dispositif de répartition d'au moins un fluide dans la boucle fluidique de la cellule de mélange et de distribution. Un dispositif de répartition, par exemple un manifold, permet de distribuer automatiquement le ou les fluides, solution tampon, solution de nettoyage, de rinçage et autres, air, utilisés au cours du fonctionnement de l'appareil. Selon une autre caractéristique de l'invention, on prévoit des moyens d'injection d'au moins un fluide porteur contenant ledit réactant dans la chambre réactionnelle de la cellule de mélange et de distribution, par le port d'injection du réservoir de volume fixe. Il s'agit là encore d'une possibilité d'automatisation, qui améliore la reproductibilité.

Il est tout à fait envisageable de disposer une pluralité de cellules de mélange et de distribution en parallèle et/ou en série. Cela peut être utile pour réaliser plusieurs réactions de reconnaissance, ou plusieurs dépôts de film, parallèlement, voire successivement sur une même surface de réaction.

En outre, l'invention concerne un appareil d'analyse comprenant au moins une cellule conforme à l'invention et des moyens de détection des réactants fixés sur la surface de réaction. Les moyens de détection peuvent être solidaires de la cellule d'analyse, ou solidaire de l'appareil. Ainsi, on peut prévoir divers types de cellules de mélange et de distribution, comprenant chacune une surface de réaction et des moyens de détection adaptés à certains réactants, et toutes compatibles avec le même appareil. Cela peut s'avérer utile lorsqu'un même utilisateur doit pouvoir réaliser une grande variété de réactions et d'analyses.

En revanche, lorsque la réaction étudiée est toujours la même, il peut être préférable d'associer les moyens de détection à l'appareil d'analyse plutôt qu'à la cellule de mélange et de distribution, en particulier pour des raisons de coûts et de reproductibilité des analyses.

L'invention concerne également, comme cela a été décrit ci-dessus en relation avec le fonctionnement du dispositif selon l'invention, un procédé de mélange et de distribution homogènes sur une surface, d'au moins un réactant porté par un fluide porteur en écoulement laminaire. Ce procédé comprend essentiellement les étapes suivantes.

Tout d'abord, on prévoit une chambre réactionnelle telle que décrite ci-dessus. Eventuellement, on introduit dans la chambre réactionnelle au moins un fluide autre que le fluide porteur contenant le réactant, par l'intermédiaire d'au moins un port d'entrée/sortie de la chambre réactionnelle, par exemple pour amorcer le procédé, ou pour remplir la boucle fluidique.

Puis, on injecte le fluide porteur contenant le réactant dans au moins l'un des réservoirs de volume fixe. Ainsi, le fluide porteur contenant le réactant va pouvoir circuler vers la chambre réactionnelle, par l'intermédiaire du port d'injection. On ferme ou on laisse ouvert alors le port d'injection du réservoir de volume fixe, puis on fait circuler le fluide porteur contenant le réactant entre le réservoir de volume fixe, la chambre réactionnelle et un réservoir de volume variable apte à communiquer indépendamment avec la chambre réactionnelle par l'intermédiaire de chacun des ports d'entrée/sortie de la chambre réactionnelle. On peut réaliser cette opération en plaçant préalablement le réservoir de volume variable à un état vide, puis en le remplissant à partir de la chambre réactionnelle, par l'intermédiaire d'un port d'entrée/sortie. On crée ainsi une aspiration qui va vider le réservoir de volume fixe. Puis, on reproduit cette étape, dans le sens contraire, en faisant circuler le fluide par un autre port d'entrée/sortie, ce qui permet de le distribuer vers une autre zone de la surface de réaction.

Ainsi, de préférence, on peut distinguer deux sous-étapes (sans que l'ordre dans lequel elles sont énoncées ne s'impose) :
- une sous-étape au cours de laquelle on fait circuler le fluide depuis un réservoir de volume fixe vers le réservoir de volume variable par l'intermédiaire d'un premier port d'entrée/sortie de la chambre réactionnelle, et
- une sous-étape au cours de laquelle on fait circuler le fluide depuis un réservoir de volume variable vers un réservoir de volume fixe par l'intermédiaire d'un second port d'entrée/sortie de la chambre réactionnelle différent du premier port d'entrée/sortie.

En d'autres termes, pour chaque étape, on sélectionne un couple de ports d'entrée/sortie. Dans la première sous-étape, le fluide circule dans un sens à travers l'un des deux ports d'entrée/sortie du couple, puis dans la seconde sous-étape, le fluide circule dans le sens contraire à travers l'autre des deux ports d'entrée/sortie du couple. Puis, on répète ces deux sous-étapes, en choisissant un autre couple de ports d'entrée/sortie, i.e. un couple qui diffère du couple précédent par un ou deux ports.

On répète les étapes précédentes, en sélectionnant successivement les différents ports d'entrée/sorties. Eventuellement, on peut injecter d'autres échantillons de fluide porteur contenant le réactant (ou un autre réactant que celui/ceux précédemment employés) par le port d'injection du réservoir de volume fixe, et répéter les étapes de mise en circulation des fluides entre le réservoir de volume fixe et le réservoir de volume variable.

Dans certains cas, il peut être nécessaire de purger le dispositif des bulles de gaz présentes, de préférence par le port d'injection d'un réservoir de volume fixe. Cela peut être réalisé en laissant le port d'injection d'un réservoir de volume fixe ouvert et réalisant le mélange, de sorte que les bulles de gaz sont entraînées vers le réservoir de volume fixe puis évacuées. En effet, le réservoir de volume fixe constitue un point haut dans la chambre réactionnelle.

Finalement, le procédé peut comprendre une étape finale au cours de laquelle on vidange la chambre réactionnelle et/ou le réservoir de volume variable et/ou le ou les réservoir(s) de volume fixe.

Eventuellement, dans le cas où la réaction entre les réactants et la surface de réaction est réversible, l'étape finale peut comprendre une étape de libération des réactants. Il peut également être souhaitable de décontaminer la chambre réactionnelle et/ou du réservoir de volume variable et/ou du ou des réservoir(s) de volume fixe. Ces opérations sont réalisées en faisant circuler les fluides adéquats dans la boucle fluidique et dans la chambre réactionnelle, d'une façon similaire à celle utilisée pour l'amorçage.

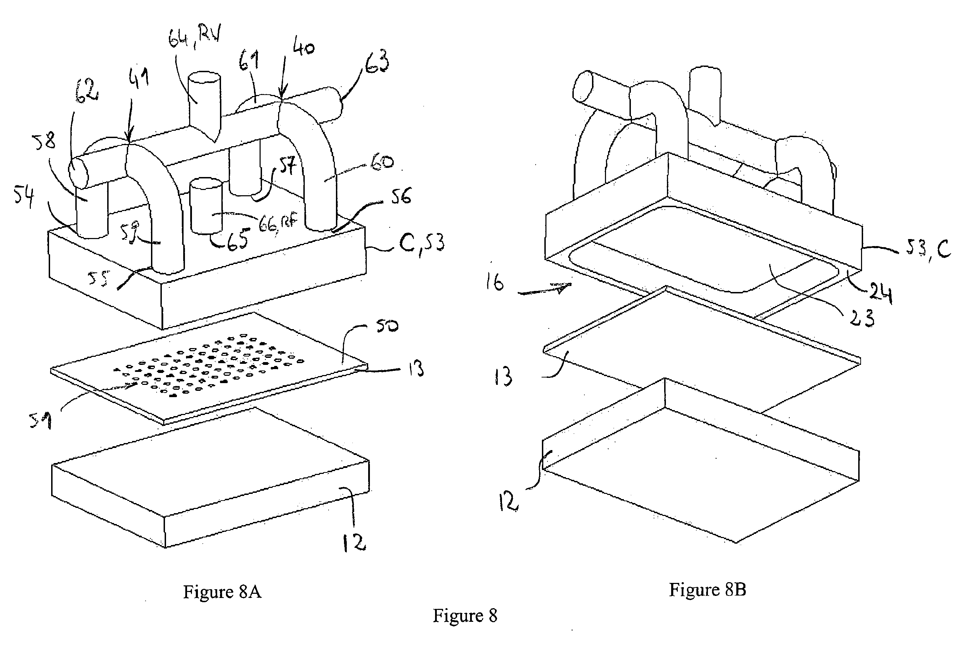

Le procédé va être décrit en détails, en référence aux figures schématiques 8 à 11. La figure 8A représente une surface de réaction plane 50 qui comprend un microréseau 51 où ont été immobilisées des sondes biologiques.

Un couvercle 53 confine la surface 51 dans un faible volume, qui constitue la chambre réactionnelle. La chambre comprend au moins quatre ports dont : trois ports d'entrée/sortie et un port d'injection. Dans le cas illustré figure 8, quatre ports d'entrée/sortie 54, 55, 56, 57 sont répartis régulièrement près de la périphérie de la chambre réactionnelle et un port d'injection 65 se situe proche du barycentre des ports d'entrée/sortie. Chaque port d'entrée/sortie 54, 55, 56 ou 57 est connecté à une conduite fluidique 58, 59, 60 ou 61 comprenant une vanne on/off, de préférence une vanne solénoïde. Les conduites 58, 59, 60 et 61 sont connectées à un réservoir de volume variable 64 qui fonctionne comme une vanne bloquée quand son volume est minimum. Les conduites, la chambre et le volume variable constituent une boucle fluidique qui comprend également un port d'alimentation 63 relié directement aux conduites 60 et 61 et un port d'extraction 62 connecté directement aux conduites 58 et 59. Le port d'alimentation 63 et le port d'extraction 62 comprennent chacun une vanne on/off. Le port d'injection 65 de la chambre est connecté à un réservoir de volume fixe 66 dont le volume est supérieur ou égale au volume maximum du réservoir de volume variable 64. Le réservoir de volume fixe est muni d'un système de fermeture étanche.

La méthode d'hybridation consiste à :
1/ Remplir la boucle fluidique avec une solution tampon et mettre à température
2/ Injecter les cibles biologiques
3/ Extraire de la boucle fluidique une partie de la solution tampon ayant le même volume que le volume de liquide injecté afin de ne pas trop diluer la solution ;
4/ Effectuer un mélange afin de distribuer de manière homogène les cibles biologiques sur le microréseau de sondes 51.

La figure 9 illustre la phase 1/. Dans un premier temps, à partir du système à vide (fig. 9A), les vannes des conduites 58, 59, 60, 61 sont bloquantes, les vannes des ports d'alimentation 63 et d'extraction 62 sont passantes et le réservoir de volume variable 64 est au maximum (vanne passante) (fig. 9B). Le réservoir de volume fixe 66 est fermé. On injecte la solution tampon par le port d'alimentation 63 en créant une différence de pression entre l'entrée et la sortie (fig. 9B). Lorsque la solution tampon atteint le port d'extraction 62, on passe à l'étape suivante.

Dans un deuxième temps, les vannes des conduites 58, 59, 60, 61 sont passantes, les vannes des ports d'alimentation 63 et d'extraction 62 sont passantes et le réservoir de volume variable 64 est au minimum (=vanne bloquante). Le réservoir de volume fixe 66 reste fermé. On poursuit l'injection de solution tampon par le port d'alimentation, la solution passe dans la chambre par les conduites 60 et 61, remplit la chambre puis ressort par les conduites 58 et 59 jusqu'au port d'extraction (fig. 9C).

La boucle fluidique est totalement remplie. Pendant cette phase le système effectue une mise à température qui correspond à la température requise pour que les cibles se fixent sur les sondes.

Il est possible d'inverser les deux étapes, et également de les effectuer en même temps.

La figure 10 illustre les phases les phases 2/ et 3/. Tout d'abord, les vannes des ports d'alimentation 63 et d'extraction 62 sont bloquantes. Toutes les autres vannes sont passantes, le réservoir de volume variable 64 est au maximum (vanne passante) et on ouvre le réservoir de volume fixe 66. On injecte les cibles biologiques (liquide porteur contenant des réactants) dans le réservoir de volume fixe 66. Le volume injecté remplit le réservoir sans qu'il ne déborde (fig. 10A).

Pour procéder au mélange il faudra vider le réservoir de volume fixe 66. Il faut donc extraire de la boucle fluidique le volume de solution tampon correspondant au volume injecté dans le réservoir de volume fixe, sans extraire le matériel biologique. Pour cela, l'extraction se fait en une série de paires d'étapes comprenant au minimum une paire de phases (fig. 10B et 10C) dans le cas où le volume injecté est égale au maximum du volume variable.

A cet effet, dans l'étape suivante (fig. 10B), toutes les vannes sont bloquantes à l'exception de la vanne du port d'extraction 62. Le réservoir de volume variable diminue au minimum et un volume de solution équivalent au volume maximum du volume variable est extrait de la boucle.

Puis, la vanne du port d'extraction 62 devient bloquante et les vannes des conduites 60 et 61 sont passantes. Le réservoir de volume variable 64 augmente au maximum. Un volume équivalent est extrait du réservoir de volume fixe 66 (fig. 10C).

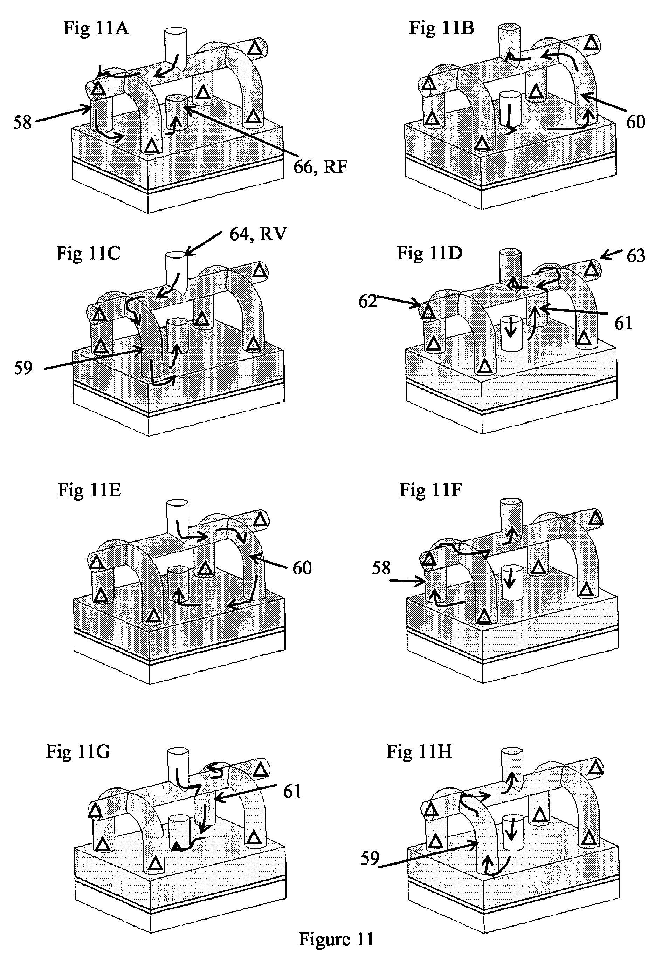

La figure 11 illustre la phase 4/ de mélange. La boucle fluidique est remplie de solution tampon et contient les cibles biologiques. La phase de mélange consiste à distribuer les cibles biologiques sur le microréseau de sondes 51, de manière chaotique. Quel que soit le flux induit dans la chambre il sera laminaire et les cibles biologiques risquent d'effectuer la même trajectoire et de rencontrer les mêmes sondes. Pour que la reconnaissance entre les cibles et les sondes soit plus homogène sur la surface, on crée un flux chaotiques à partir des plusieurs flux laminaires, ce qui multiplie ainsi les chances de « rencontre » entre les cibles et les sondes.

Le mélange est une succession 4 étapes qui se répètent de manière séquentielle tout au long de la durée de la réaction. Chaque étape comprend 2 sous-étapes :
- une première sous-étape au cours de laquelle le réservoir de volume variable diminue au minimum. Un des quatre ports d'entrée/sortie est passant et les autres sont bloquants. Un volume équivalent au volume maximum du réservoir de volume variable est injecté dans la chambre et l'excédent est injecté dans le réservoir de volume fixe 66. Le flux va donc du réservoir de volume variable vers le réservoir de volume fixe.
- une seconde sous-étape au cours de laquelle le réservoir de volume variable augmente au maximum, un port d'entrée/sortie différent du port précédemment passant, devient passant, alors que les autres sont bloquants. Par exemple, le port d'entrée/sortie qui devient passant est celui qui est opposé au port d'entrée/sortie précédemment passant. Un volume équivalent au volume maximum du réservoir de volume variable est extrait de la chambre et un même volume est donc extrait du réservoir de volume fixe vers la chambre. Le flux va du réservoir de volume fixe vers le réservoir de volume variable.

Ainsi, par exemple :
Phase 1 on injecte la solution par l'entrée 54 (fig. 11A) et on extrait la solution par la sortie 56 (fig. 11B). Phase 2 on injecte la solution par l'entrée 55 (fig. 11C) et on extrait la solution par la sortie 57 (fig. 11D). Phase 3 on injecte la solution par l'entrée 56 (fig. 11E) et on extrait la solution par la sortie 54 (fig. 11F). Phase 4 on injecte la solution par l'entrée 57 (fig. 11G) et on extrait la solution par la sortie 55 (fig. 11H).

Il est bien entendu tout à fait envisageable de réaliser les injections et extractions de façon aléatoire, ou encore d'extraire le fluide simultanément par un couple de ports d'entrée/sortie, puis de le réinjecter dans la chambre réactionnelle par un autre couple de ports d'entrée/sortie.

### EXEMPLES

### A- MATERIELS ET METHODES

### Matériel biologique

La société Sequentia (Evry, France) a fourni les oligonucléotides purifiés par HPLC. Chaque sonde a été synthétisée avec une groupe aminée (-CH₂)₆-NH₂ attaché à son extrémité 5'.

Une sonde témoin de contrôle d'immobilisation 25-oligomérique marquée au Cy3TM et deux sondes 12-oligomériques (allèle a et allèle b) qui contenaient une seule mutation ponctuelle centrale (G à la place de A), ont été utilisées dans cette expérience.

Des cibles synthétiques d'ADN monocaténaire 84-oligomérique marquées au Cy3^{™}, avec une séquence complémentaire des deux sondes 12-oligomériques ont été utilisées dans cette expérience. Les cibles ont été diluées dans une solution d'hybridation 6X SSC / 0,1% SDS.

### Fabrication des biopuces

Des microréseaux ont été fabriqués sur un substrat RosaSlide (RosaTech, France) en utilisant 25µM de sondes diluées dans une solution 10X PBS. L'appareil de multi-microprojection de 192 points RosaTech a été utilisé pour déposer environ 5 nL de solution de sondes à chaque point, sans contact ou contamination croisée. La surface du substrat a été inactivée à l'aide de la solution RosaBlock (RosaTech, France). Cette étape minimise l'adsorption au cours de l'hybridation. Les microréseaux ont été lavés à l'aide d'une solution de SDS 1% pendant 30 minutes à 80°C, puis rincés pendant 30 minutes à l'eau chaude à 80°C. Ce traitement assure la reproductibilité entre microréseaux élimine les sondes oligonucléotidiques non liées de façon covalente au substrat.

285 dépôts ont été disposés uniformément avec un écartement de 1 mm sur la surface de 42 x 15 mm² du substrat. Le microréseau est constitué de clusters identiques formés par un motif en damier de dépôts des deux allèles. Chaque cluster est séparé par la sonde témoin de contrôle marqué par fluorescence.

### La station d'hybridation selon l'invention

Le micro-mélangeur TrayMix est une station automatique de mélange actif et d'hybridation, qui est compatible avec une lame de microscope standard. La chambre réactionnelle a les dimensions suivantes 18,8 mm x 49 mm x 50 µm (largeur x longueur x hauteur) et elle est scellée par un joint circulaire. Le système fluidique automatique de mélange par advection chaotique est présenté schématiquement en figure 7.

Le mélange chaotique est crée par l'intermédiaire de flux entrecroisés périodiques produits à l'aide de microvalves à l'intérieur de la chambre réactionnelle. Les ports d'alimentation et d'extraction et les ports d'entrée/sortie, permettent l'injection de différentes solutions (d'hybridation, de lavage, de décontamination) dans la chambre, ainsi que l'extraction des liquides, notamment vers la poubelle. Un ordinateur commande le fonctionnement du dispositif par l'intermédiaire d'une interface logicielle utilisateur. L'utilisateur injecte simplement les cibles directement dans la chambre réactionnelle à travers le port d'injection. Le système crée un mélange par advection chaotique, sans perte d'échantillon biologique précieux. Le volume total à l'intérieur du système de mélange est de 500 µL. La température d'hybridation est contrôlée grâce à un élément chauffant qui peut varier entre 20 et 80°C ± 0,5°C.

### Hybridation

### 1- Hybridation passive (statique)

### 1.1- Méthode entre lame et lamelle (manuelle)

Les résultats obtenus selon la méthode conventionnelle d'hybridation entre lame et lamelle, sont utilisés comme seuil de base pour les comparaisons. Idéalement, un faible volume de cible (environ 50 µL) est placé entre la surface de la lame portant le microréseau et la lamelle. L'hybridation est menée dans un environnement confiné, sous humidité relative et température contrôlées.

### 1.2- Micro-mélangeur sans mélange chaotique

La lame portant le microréseau est placé dans le micro-mélangeur. Pour l'hybridation, les caractéristiques de mélangeurs du dispositif sont débranchées et une solution homogène de cible est introduite dans la chambre réactionnelle.

### 2- Hybridation passive (dynamique)

Deux protocoles d'hybridation distincts ont été utilisés indépendamment pour démontrer les avantages du mélange chaotique à l'intérieur de la chambre réactionnelle :

### 2.1- Hybridation automatique avec une solution cible homogène :

1. Insertion manuelle du microréseau dans la chambre réactionnelle
2. Mise en température automatique et initialisation automatique du système avec une solution cible homogène
3. Mélange automatique dans la chambre réactionnelle
4. Extraction automatique des réactifs de la chambre réactionnelle
5. Retrait manuel du microréseau
6. Lavage automatique de la chambre avec de l'eau ultra-pure, en préparation d'hybridations successives

### 2.2- Hybridation automatique avec injection de la solution cible dans la boucle de mélange initialisée

1. Insertion manuelle du microréseau dans la chambre réactionnelle
2. Mise en température automatique et initialisation automatique du système avec une solution tampon
3. Injection manuelle de la solution cible dans la chambre réactionnelle via le port d'injection
4. Mélange automatique dans la chambre réactionnelle
5. Extraction automatique des réactifs de la chambre réactionnelle
6. Retrait manuel du microréseau
7. Lavage automatique de la chambre avec de l'eau ultra-pure, en préparation d'hybridations successives

La comparaison des résultats obtenus selon ces deux protocoles a été utilisée pour démontrer les avantages du mélange chaotique selon l'invention. Toutes les expériences d'hybridation ont été réalisées en deux heures, hormis les expériences de cinétique.

### Lavage des microréseaux

Tous les réseaux hybridés ont été lavés durant deux minutes dans une solution SSC 5X et SDS 0,1%, suivi par un lavage dans une solution SSC 2X. Puis les microréseaux ont été séchés par centrifugation à 1 500 g pendant une minute avant d'être scannés.

### Scannage et analyse des résultats

Les microréseaux ont été scannés sous deux gains PMT, en utilisant GeneTACTM LS IV (Genomic Solutions Ltd, Cambridgeshire, UK) à une résolution de 10 µm pour scanner les sondes témoin immobilisées et les sondes hybridées (allèle a et allèle b) en sous-saturation.

L'intensité de fluorescence de chaque point a été analysée par segmentation à l'aide logiciel TARGET développé par le LEOM (http://leom.ec-lyon.fr/). L'intensité moyenne du signal de chaque point a été mesurée sur le microréseau. Le coefficient de variation (CV) a été calculé sur la base des mesures réalisées. Le CV a été déterminé à partir du rapport de l'écart-type de l'intensité des signaux à l'intensité moyenne du signal pour la même population. Ce coefficient permet de comparer l'homogénéité d'hybridation sur l'ensemble de la surface du substrat. Les intensités de signal des sondes témoins marquées au Cy3TM pour les trois microréseaux, ont été utilisées pour déterminer l'hétérogénéité intrinsèque des microréseaux. Le CV global du substrat était entre 0,10 et 0,15.

### B- RESULTATS

Etant donné que les volumes employés dans le micro-mélangeur sont 10 fois plus grands que dans la méthode entre lame et lamelle (500 µL comp. 50 µL), deux séries d'expériences ont été menées.

Dans une première série d'expériences, une concentration similaire de cible a été utilisée sous deux conditions expérimentales :
1. Statique : entre lame et lamelle (1.1) et dans le micro-mélangeur avec les fonctions de mélange débranchées (1.2)
2. Dynamique : micro-mélangeur avec les fonctions de mélange en fonctionnement

Dans la seconde série d'expériences, une même quantité de cibles a été employées, diluée dans 50 µL pour la méthode entre lame et lamelle, et dans 500 µL pour les méthodes dans le micro-mélangeur

### Effet du mélange chaotique sur l'hybridation (concentrations identiques)

Pour déterminer l'impact du mélange actif, on compare les résultats d'hybridation obtenus avec le micro-mélangeur avec ou sans mélange chaotique. Les résultats montrent les avantages, en termes d'intensité et d'homogénéité de signal, de l'hybridation dynamique par rapport à l'hybridation statique.

Les résultats de fluorescence et le CV de l'hybridation entre lame et lamelle servent de référence. Le haut CV de cette technique démontre la non uniformité de la réponse d'hybridation inhérente à la méthode entre lame et lamelle. Même si la solution cible initiale est homogène, le CV d'hybridation dans la boucle de mélange sans mélange chaotique est encore plus important (0,56).

Le mélange chaotique permet de réduire le CV d'hybridation presque jusqu'à la valeur du CV intrinsèque des microréseaux, que la solution injectée soit homogène ou non.

### Tests avec une quantité de cible identique

Les deux expériences d'hybridations statique et dynamique ont été réalisées avec 5 pmol de cible.

Même si la solution cible utilisée avec le micro-mélangeur était 10 fois moins concentrée que celle utilisée avec la méthode entre lame et lamelle, le micro-mélangeur a permis d'obtenir des résultats supérieurs en termes d'intensité et de CV. Les rapports du signal/bruit (SNR "signal/noise ratio") pour chaque type de sonde, sont représentés en figure 12.

L'hybridation dynamique a permis d'augmenter la spécificité d'hybridation pour la détection d'un polymorphisme de nucléotide simple (SNP "single nucleotide polymorphism"), en augmentant le SNR pour l'allèle a (figuré noir) et en réduisant le SNR pour l'allèle b (figuré grisé).

La cinétique globale de la réaction est un paramètre important à étudier car les concentrations de cible entre les deux techniques sont très différentes. La figure 13 illustre la cinétique global d'hybridation pour les hybridations statique (carré noir) et dynamique (cercle). Les deux courbes sont similaires, ce qui suggère que les vitesses d'hybridation sont du même ordre de grandeur. Cela dit, à tout moment, l'intensité du signal et l'écart-type sont améliorés avec l'hybridation dynamique par rapport à l'hybridation statique.

Avec chaque méthode, la valeur asymptotique d'hybridation n'est pas atteinte. La réduction du taux d'hybridation est moins prononcée avec le mélange chaotique, en raison de la fourniture constante de molécules cibles sur la surface de réaction, obtenue par le mélange actif (rapport cible/sonde = 50).

Le mélange chaotique résulte en une amélioration de la cinétique de réaction et une distribution rapide des cibles sur l'ensemble de la surface de réaction. Après 30 minutes, les signaux d'hybridation dans le cas du mélange actif sont supérieurs à ceux obtenus dans le cas de la technique entre lame et lamelle.

On constate qu'en moins de 200 minutes d'hybridation dynamique, on obtient des résultats similaires à ceux d'une hybridation entre lame et lamelle durant toute une nuit. Cette vitesse, environ quatre fois plus grande pour l'hybridation dynamique, est un avantage supplémentaire du procédé selon l'invention, en plus de l'amélioration de l'homogénéité et de l'augmentation de l'intensité du signal, obtenues avec l'hybridation dynamique.

On peut résumer les principaux avantages de la présente invention :
- Mélange uniforme et homogène sans zone morte à la surface de réaction du support à traiter (visualisé par homogénéisation et mélange d'un marqueur fluorescent dans la chambre initialisé avec une solution tampon).
- Amélioration des vitesses de réactions, par rapport aux techniques statiques entre lame et lamelle, optimisation de la durée et du nombre de cycles de réactions.
- Réponse biologique très uniformes sur l'ensemble de la zone traitée : le coefficient de variation de l'ordre de grandeur de l'uniformité intrinsèque du support, i.e. le "bruit" intrinsèque du support.
- Automatisation de l'ensemble de la méthode, ce qui conduit à une amélioration de la reproductibilité.
- Amélioration de la spécificité entre deux mutations simples.
- Possibilité à tout moment de rajouter des réactifs dans la chambre réactionnelle, via le port d'injection. C'est intéressant par exemple pour des systèmes de doubles marquages (type ELISA).
- Possibilité d'introduire dans la boucle fluidique un élément chauffant (> à 90°C) pour effectuer des dénaturations des cibles doubles brins ou bien casser les structures secondaires des cibles en dehors de la chambre réactionnelle.

En particulier, l'invention trouve son application
- dans les techniques de criblage haut débit,
- dans les biopuces : ADN (microréseau, fluorescence in-situ hybridation (FISH), hybridation de génome complet "Complete genome hybridation"), peptides, protéines, glycoprotéines, enzymes, catalyse, cellules, organismes, etc..),
- dans les réactions catalytiques (sélection de "metal binding proteine" ou protéine fixant un métal, par exemple), enzymatique, etc..,
- dans les réactions chimiques et électrochimiques.

## Revendications

1. Procédé de mélange et de distribution homogènes sur une surface, d'au moins un réactant porté par un fluide porteur en écoulement laminaire, comprenant les étapes essentielles suivantes :
a) on prévoit une chambre réactionnelle (16) pourvue :
• d'au moins une surface de réaction (13) sur laquelle le réactant est susceptible de se fixer, directement ou indirectement, éventuellement de façon réversible,
• d'au moins trois ports d'entrée/sortie (25, 26) de fluide, et
**caractérisé en ce que** la chambre réactionnelle est aussi pourvue :
• d'au moins un réservoir dont le volume est fixe, le réservoir de volume fixe (RF) étant apte à communiquer d'une part, avec la chambre réactionnelle (16), et d'autre part, avec l'extérieur de la chambre réactionnelle par l'intermédiaire d'un port d'injection (27) muni de moyens (28) de fermeture hermétique;
et **en ce que** le procédé comprend aussi les étapes suivantes :
b) éventuellement, on ferme ou on maintient fermé hermétiquement le port d'injection des réservoirs de volume fixe, puis on introduit dans la chambre réactionnelle (16) au moins un fluide autre que le fluide porteur contenant le réactant, par l'intermédiaire d'au moins un port d'entrée/sortie (25, 26) de la chambre réactionnelle (16) ;
c) on injecte le fluide porteur contenant le réactant dans au moins l'un des réservoirs de volume fixe (RF) ;
d) on fait circuler le fluide porteur contenant le réactant entre le réservoir de volume fixe (RF), la chambre réactionnelle (16) et un réservoir de volume variable (RV) apte à communiquer indépendamment avec la chambre réactionnelle par l'intermédiaire de chacun des ports d'entrée/sortie de la chambre réactionnelle ;
e) on répète l'étape d) en sélectionnant successivement les différents ports d'entrée/sorties ;
f) éventuellement, on répète les étapes b) et/ou c) et/ou d) et/ou e).

2. Procédé selon la revendication précédente, dans lequel les étapes d) et e) comprennent respectivement :
- une sous-étape d1) et e1) au cours de laquelle on fait circuler le fluide depuis un réservoir de volume fixe (RF) vers le réservoir de volume variable (RV) par l'intermédiaire d'un premier port d'entrée/sortie de la chambre réactionnelle, et
- une sous-étape d2) et e2) au cours de laquelle on fait circuler le fluide depuis un réservoir de volume variable (RV) vers un réservoir de volume fixe (RF) par l'intermédiaire d'un second port d'entrée/sortie de la chambre réactionnelle différent du premier port d'entrée/sortie.

3. Procédé selon l'une quelconque des revendications précédentes, dans lequel l'étape b) comprend une étape d'amorçage au cours de laquelle on introduit un fluide d'amorçage dans la chambre réactionnelle par l'intermédiaire d'au moins un port d'entrée/sortie de la chambre réactionnelle (16).

4. Procédé selon l'une quelconque des revendications précédentes, comprenant une étape finale au cours de laquelle on vidange la chambre réactionnelle et/ou le réservoir de volume variable (RV) et/ou le ou les réservoir(s) de volume fixe (RF).

5. Procédé selon la revendication précédente, dans lequel l'étape finale comprend en outre une étape de libération des réactants, et/ou une étape de décontamination de la chambre réactionnelle (16) et/ou du réservoir de volume variable (RV) et/ou du ou des réservoir(s) de volume fixe (RF).

6. Procédé selon l'une quelconque des revendications précédentes, comprenant au moins une étape de purge des bulles de gaz présentes, de préférence par l'ouverture d'injection d'un réservoir de volume fixe (RF).

7. Procédé selon l'une quelconque des revendications précédentes, dans lequel la surface de réaction (13) porte une pluralité de sondes, notamment chimiques ou biochimiques, greffées sur ladite surface, et dans lequel lesdits réactants sont susceptibles de réagir spécifiquement avec lesdites sondes.

8. Procédé selon l'une quelconque des revendications 1 à 6, dans lequel les réactants sont aptes à former un film homogène, notamment chimique organique et/ou inorganique, polymérique ou électrochimique, sur la surface de réaction (13).

9. Procédé d'analyse, comprenant la mise en oeuvre d'un procédé de mélange et de distribution homogènes sur une surface selon l'une quelconque des revendications précédentes, et comprenant en outre une étape de détection des réactants fixés sur la surface de réaction (13).

10. Cellule (3) pour mélanger et pour distribuer de façon homogènes sur une surface, au moins un réactant porté par un fluide porteur en écoulement laminaire, comprenant :
- une chambre réactionnelle (16) pourvue :
• d'au moins une surface de réaction (13) sur laquelle le réactant est susceptible de se fixer, directement ou indirectement, éventuellement de façon réversible,
• d'au moins trois ports d'entrée/sortie (25, 26) de fluide, et
- une boucle fluidique (7) comprenant au moins un port d'alimentation (63), au moins un port d'extraction (62) et au moins un réservoir (RV) dont le volume est variable, le réservoir de volume variable (RV) étant apte à communiquer indépendamment avec la chambre réactionnelle (16) par l'intermédiaire de chacun des ports d'entrée/sortie (25, 26) ;
- des moyens de mise en circulation des fluides dans la chambre réactionnelle (16) et dans la boucle fluidique (7),
**caractérisé en ce que** la chambre réactionnelle est pourvue
• d'au moins un réservoir (RF) dont le volume est fixe, le réservoir de volume fixe étant apte à communiquer d'une part, avec la chambre réactionnelle (16), et d'autre part, avec l'extérieur de la chambre réactionnelle par l'intermédiaire d'un port d'injection (27) muni de moyens (28) de fermeture hermétique.

11. Cellule selon la revendication précédente, dans laquelle le volume du ou des réservoirs de volume fixe (RF) est supérieur ou égal au volume maximum du réservoir de volume variable (RV).

12. Cellule selon la revendication 10 ou 11, dans laquelle les ports d'entrée/sortie (25, 26) de la chambre réactionnelle (16) sont disposés régulièrement sur la périphérie de la chambre réactionnelle.

13. Cellule selon l'une quelconque des revendications 10 à 12 dans laquelle la chambre réactionnelle (16) est délimitée en haut, par un couvercle (C) muni desdits ports d'entrée/sortie (25, 26), en bas par ladite surface de réaction (13) et latéralement par un joint d'étanchéité (22).

14. Cellule selon la revendication précédente, dans laquelle la face inférieure du couvercle (C) comprend une gorge périphérique (21) où est logée un joint d'étanchéité torique (22).

15. Cellule selon les revendications 13 ou 14 dans laquelle la surface de réaction (13) est la surface supérieure d'une pièce rapportée, de préférence une lame de microscope, la cellule comprenant en outre des moyens de positionnement de la pièce rapportée par rapport au couvercle (C).

16. Cellule selon l'une quelconque des revendications 10 à 15, comprenant en outre des moyens de régulation de la température régnant dans la chambre et/ou des moyens de régulation de la température régnant dans la boucle fluidique.

17. Cellule selon la revendication précédente, dans laquelle les moyens de régulations de la température se présente sous la forme d'au moins une cellule à effet Peltier.

18. Cellule selon l'une quelconque des revendications 13 à 17, comprenant des moyens de verrouillage (19) du couvercle (C) par rapport à la surface de réaction (13).

19. Cellule selon l'une quelconque des revendications 10 à 18, comprenant en outre des moyens de détection des réactants fixés sur la surface de réaction (13).

20. Appareil de reconnaissance chimique et/ou biochimique "cible-sonde", comprenant au moins une cellule (3) selon l'une quelconque des revendications 10 à 18, dans lequel la surface de réaction (13) de la cellule (3) se présente sous la forme d'un microréseau de sondes spécifiques, préparé sur un support, de préférence une lame de microscope, et dans lequel le fluide porteur contient une pluralité de réactants "cibles" susceptibles de réagir spécifiquement avec les sondes du microréseau.

21. Appareil pour former un film homogène sur une surface, comprenant au moins une cellule selon l'une quelconque des revendications 10 à 18,

22. Appareil selon la revendication 20 ou 21, comprenant :
- un dispositif de répartition d'au moins un fluide dans la boucle fluidique de la cellule de mélange et de distribution.
- des moyens d'injection d'au moins un fluide porteur contenant ledit réactant dans la chambre réactionnelle de la cellule de mélange et de distribution.

23. Appareil selon l'une quelconque des revendications 20 à 22, dans lequel une pluralité de cellules de mélange et de distribution sont placées en parallèle et/ou en série.

24. Appareil d'analyse comprenant un appareil selon l'une quelconque des revendications 20 à 23 et des moyens de détection des réactants fixés sur la surface de réaction, les moyens de détection étant solidaires ou non de la ou des cellule(s) de mélange et de distribution.

## Claims

1. A method for the homogeneous mixing and distribution, on a surface, of at least one reactant carried by a carrier fluid in laminar flow, comprising the following essential steps:
a) a reaction chamber is provided, which chamber (16) has:
• at least one reaction surface (13) on which the reactant is capable of being fixed, directly or indirectly, optionally reversibly,
• at least three fluid inlets/outlets (25,26),
**characterized**
**in that** the reaction chamber (16) is also provided with at least one reservoir, the volume of which is fixed, the fixed-volume reservoir (RF) being able to communicate, firstly, with the reaction chamber (16) and, secondly, with the outside of the reaction chamber via an injection orifice (27) equipped with hermetic closure means (28);
and **in that** said method also comprises the following steps:
b) optionally, the injection orifice of the fixed-volume reservoirs is hermetically closed or kept hermetically closed and then at least one fluid other than the carrier fluid containing the reactant is introduced into the reaction chamber via at least one inlet/outlet (25,26)of the reaction chamber (16);
c) the carrier fluid containing the reactant is injected into at least one of the fixed-volume reservoirs (RF);
d) the carrier fluid containing the reactant is circulated between the fixed-volume reservoir (RF), the reaction chamber (16) and a variable-volume reservoir (RV) able to communicate independently with the reaction chamber via each of the inlets/outlets of the reaction chamber;
e) step d) is repeated by successively selecting the various inlets/outlets;
f) optionally, steps b) and/or c) and/or d) and/or e) are repeated.

2. The method as claimed in the preceding claim, in which steps d) and e) respectively comprise:
- a substep d1) and e1) during which the fluid is circulated from a fixed-volume reservoir (RF) to the variable-volume reservoir (RV) via a first inlet/outlet of the reaction chamber, and
- a substep d2) and e2) during which the fluid is circulated from a variable-volume reservoir (RV) to a fixed-volume reservoir (RF) via a second inlet/outlet of the reaction chamber that is different than the first inlet/outlet.

3. The method as claimed in either one of the preceding claims, in which step b) comprises an initiating step during which an initiating fluid is introduced into the reaction chamber via at least one inlet/outlet of the reaction chamber (16).

4. The method as claimed in any one of the preceding claims, comprising a final step during which the reaction chamber and/or the variable-volume reservoir (RV) and/or the fixed-volume reservoir(s) (RF) is (are) drained.

5. The method as claimed in the preceding claim, in which the final step also comprises a step of releasing the reactants, and/or a step of decontaminating the reaction chamber (16) and/or the variable-volume reservoir (RV) and/or the fixed-volume reservoir(s) (RF).

6. The method as claimed in any one of the preceding claims, comprising at least one step of flushing the gas bubbles present, preferably via the injection orifice of a fixed-volume reservoir (RF).

7. The method as claimed in any one of the preceding claims, in which the reaction surface (13) carries a plurality of probes, in particular chemical or biochemical probes, grafted onto said surface, and in which said reactants are capable of reacting specifically with said probes.

8. The method as claimed in any one of claims 1 to 6, in which the reactants are able to form a homogeneous, in particular organic and/or inorganic chemical, polymeric or electrochemical, film on the reaction surface (13).

9. A method of analysis, comprising the implementation of a method for homogeneous mixing and distribution on a surface as claimed in any one of the preceding claims, further comprising a step of detecting the reactants fixed to the reaction surface (13).

10. A cell (3) for homogeneously mixing and distributing, on a surface, at least one reactant carried by a carrier fluid in laminar flow, comprising:
- a reaction chamber (16) which has:
• at least one reaction surface (13) on which the reactant is capable of being fixed, directly or indirectly, optionally reversibly,
• at least three fluid inlets/outlets (25,26), and
• at least one reservoir (RF), the volume of which is fixed, the fixed-volume reservoir (RF) being able to communicate, firstly, with the reaction chamber (16) and, secondly, with the outside of the reaction chamber via an injection orifice (27) equipped with hermetic closure means (28),
- a fluid loop (7) comprising at least one feed port (63), at least one extraction port (62) and at least one reservoir (RV), the volume of which is variable, the variable-volume reservoir (RV) being able to communicate independently with the reaction chamber (16) via each of the inlets/outlets (25,26);
- means for circulating the fluids in the reaction chamber (16) and in the fluid loop (17),
**characterized in that** the reaction (16) is equipped at least one reservoir (RF), the volume of which is fixed, the fixed-volume reservoir (RF) being able to communicate, firstly, with the reaction chamber (16) and, secondly, with the outside of the reaction chamber via an injection orifice (27) equipped with hermetic closure means (28).

11. The cell as claimed in the preceding claim, in which the volume of the fixed-volume reservoir(s) (RF) is greater than or equal to the maximum volume of the variable-volume reservoir (RV).

12. The cell as claimed in claim 10 or 11, in which the inlets/outlets (25,26) of the reaction chamber (16) are arranged regularly on the periphery of the reaction chamber (16).

13. The cell as claimed in any one of claims 10 to 12, in which the reaction chamber (16) is delimited at the top by a cover (C) provided with said inlets/outlets (25,26), at the bottom by said reaction surface (13) and laterally by a leaktight seal (22).

14. The cell as claimed in the preceding claim, in which the lower face of the cover (C) comprises a peripheral groove (21) in which a leaktight 0-ring seal (22) is housed.

15. The cell as claimed in claim 13 or 14, in which the reaction surface (13) is the upper surface of a fitted part, preferably a microscope slide, the cell also comprising means for positioning the fitted part relative to the cover (C).

16. The cell as claimed in any one of claims 10 to 15, further comprising means for regulating the temperature in the chamber and/or means for regulating the temperature in the fluid loop.

17. The cell as claimed in the preceding claim, in which the means for regulating the temperature are in the form of at least one Peltier-effect cell.

18. The cell as claimed in any one of claims 13 to 17, comprising means (19) for locking the cover (C) relative to the reaction surface (13).

19. The cell as claimed in any one of claims 10 to 18, also comprising means for detecting the reactants fixed to the reaction surface (13).

20. A chemical and/or biochemical "target-probe" recognition apparatus, comprising at least one cell (3) as claimed in any one of claims 10 to 18, in which the reaction surface (13) of the cell (3) is in the form of a microarray of specific probes, prepared on a support, preferably a microscope slide, and in which the carrier fluid contains a plurality of "target" reactants capable of reacting specifically with the probes of the microarray.

21. An apparatus for forming a homogeneous film on a surface, comprising at least one cell as claimed in any one of claims 10 to 18.

22. The apparatus as claimed in claim 20 or 21, comprising:
- a device for distributing at least one fluid in the fluid loop of the mixing and distributing cell;
- means for injecting at least one carrier fluid containing said reactant into the reaction chamber of the mixing and distributing cell.

23. The apparatus as claimed in any one of claims 20 to 22, in which a plurality of mixing and distributing cells are placed in parallel and/or in series.

24. An analytical apparatus comprising an apparatus as claimed in any one of claims 20 to 23 and means for detecting the reactants fixed to the reaction surface, the detection means being possibly attached to the mixing and distributing cell(s).

## Patentansprüche

1. Verfahren zum homogen Mischen und Verteilen auf einer Oberfläche wenigstens eines Reaktanden, der von einem Trägerfluid in laminarer Strömung getragen wird, das die folgenden wesentlichen Schritte enthält:
a) Vorsehen einer Reaktionskammer (16), die versehen ist mit:
- wenigstens einer Reaktionsoberfläche (13), auf der sich der Reaktand direkt oder indirekt, eventuell auf reversible Weise, fixieren kann, und
- wenigstens drei Eingangs-/Ausgangsanschlüssen (25, 26) für Fluid,
**dadurch gekennzeichnet, dass** die Reaktionskammer außerdem versehen ist mit:
- wenigstens einem Vorratsbehälter, dessen Volumen fest ist, wobei der Vorratsbehälter (RF) mit festem Volumen dazu ausgelegt ist, einerseits mit der Reaktionskammer (16) und andererseits mit der äußeren Umgebung der Reaktionskammer über einen Einlassanschluss (27) zu kommunizieren, der mit Mitteln (28) zum hermetischen Verschließen versehen ist;
und dass das Verfahren außerdem die folgenden Schritte enthält:
b) eventuelles hermetisches Schließen oder Geschlossenhalten des Einlassanschlusses der Vorratsbehälter mit festem Volumen, dann Einleiten wenigstens eines Fluids, das von dem den Reaktanden enthaltendem Trägerfluid verschieden ist, in die Reaktionskammer (16) über wenigstens einen Eingangs-/Ausgangsanschluss (25, 26) der Reaktionskammer (16);
c) Einleiten des Trägerfluids, das den Reaktanden enthält, in wenigstens einen der Vorratsbehälter (RF) mit festem Volumen;
d) Zirkulierenlassen des Trägerfluids, das den Reaktanden enthält, zwischen dem Vorratsbehälter (RF) mit festem Volumen, der Reaktionskammer (16) und einem Vorratsbehälter (RV) mit variablem Volumen, der mit der Reaktionskammer über jeden der Eingangs-/Ausgangsanschlüsse der Reaktionskammer unabhängig kommunizieren kann,
e) Wiederholen des Schrittes d) durch aufeinander folgendes Wählen der verschiedenen Eingangs-/Ausgangsanschlüsse;
f) eventuell Wiederholen der Schritte b) und/oder c) und/oder d) und/oder e).

2. Verfahren nach dem vorhergehenden Anspruch, wobei die Schritte d) und e) jeweils enthalten:
- einen Unterschritt d1) bzw. e1), in dessen Verlauf das Fluid von einem Vorratsbehälter (RF) mit festem Volumen zu dem Vorratsbehälter (RV) mit variablem Volumen über einen ersten Eingangs-/Ausgangsanschluss der Reaktionskammer zirkuliert, und
- einen Unterschritt d2) bzw. e2), in dessen Verlauf das Fluid von einem Vorratsbehälter (RV) mit variablem Volumen zu einem Vorratsbehälter (RF) mit festem Volumen über einen zweiten Eingangs-/Ausgangsanschluss der Reaktionskammer, der von dem ersten Eingangs-/Ausgangsanschluss verschieden ist, zirkuliert.

3. Verfahren nach einem der vorhergehenden Ansprüche, wobei der Schritt b) einen Aktivierungsschritt enthält, in dessen Verlauf ein Aktivierungsfluid in die Reaktionskammer über wenigstens einen Eingangs-/Ausgangsanschluss der Reaktionskammer (16) eingeleitet wird.

4. Verfahren nach einem der vorhergehenden Ansprüche, das einen abschließenden Schritt enthält, in dessen Verlauf die Reaktionskammer und/oder der Vorratsbehälter (RV) mit variablem Volumen und/oder der oder die Vorratsbehälter (RF) mit festem Volumen entleert werden.

5. Verfahren nach dem vorhergehenden Anspruch, wobei der abschließende Schritt außerdem einen Schritt des Freisetzens der Reaktanden und/oder einen Schritt des Dekontaminierens der Reaktionskammer (16) und/oder des Vorratsbehälters (RV) mit variablem Volumen und/oder des oder der Vorratsbehälter (RF) mit festem Volumen enthält.

6. Verfahren nach einem der vorhergehenden Ansprüche, das wenigstens einen Schritt des Entleerens vorhandener Gasblasen vorzugsweise durch die Einlassöffnung eines Vorratsbehälters (RF) mit festem Volumen enthält.

7. Verfahren nach einem der vorhergehenden Ansprüche, wobei die Reaktionsoberfläche (13) mehrere Sonden, insbesondere chemische oder biochemische Sonden trägt, die in die Oberfläche implantiert sind, wobei die Reaktanden spezifisch mit diesen Sonden reagieren können.

8. Verfahren nach einem der Ansprüche 1 bis 6, wobei die Reaktanden auf der Reaktionsoberfläche (13) einen homogenen Film, insbesondere einen chemisch organischen und/oder anorganischen Film, einen Polymerfilm oder einen elektrochemischen Film bilden können.

9. Analyseverfahren, das die Ausführung eines Verfahrens zum homogenen Mischen und Verteilen auf einer Oberfläche nach einem der vorhergehenden Ansprüche enthält und außerdem einen Schritt des Detektierens von auf der Reaktionsoberfläche (13) fixierten Reaktanden enthält.

10. Zelle (3) zum homogenen Mischen und Verteilen auf einer Oberfläche wenigstens eines Reaktanden, der von einem Trägerfluid in laminarer Strömung getragen wird, die enthält:
- eine Reaktionskammer (16), die versehen ist mit:
- wenigstens einer Reaktionsoberfläche (13), auf der sich der Reaktand direkt oder indirekt, eventuell auf reversible Weise, fixieren kann,
- wenigstens drei Eingangs-/Ausgangsanschlüssen (25, 26) für Fluid, und
- eine Fluidschleife (7), die wenigstens einen Versorgungsanschluss (63), wenigstens einen Entnahmeanschluss (62) und wenigstens einen Vorratsbehälter (RV), dessen Volumen variabel ist, enthält, wobei der Vorratsbehälter (RV) mit variablem Volumen mit der Reaktionskammer (16) über jeden der Eingangs-/Ausgangsanschlüsse (25, 26) unabhängig kommunizieren kann; und
- Mittel zum Zirkulierenlassen von Fluiden in der Reaktionskammer (16) und in der Fluidschleife (7),
**dadurch gekennzeichnet, dass** die Reaktionskammer versehen ist mit
- wenigstens einem Vorratsbehälter (RF), dessen Volumen fest ist, wobei der Vorratsbehälter mit festem Volumen einerseits mit der Reaktionskammer (16) und andererseits mit der äußeren Umgebung der Reaktionskammer über einen Einlassanschluss (27) kommunizieren kann, der mit Mitteln (28) zum hermetischen Verschließen versehen ist.

11. Zelle nach dem vorhergehenden Anspruch, wobei das Volumen des oder der Vorratsbehälter (RF) mit festem Volumen größer oder gleich dem maximalen Volumen des Vorratsbehälters (RV) mit variablem Volumen ist.

12. Zelle nach Anspruch 10 oder 11, wobei die Eingangs-/Ausgangsanschlüsse (25, 26) der Reaktionskammer (16) am Umfang der Reaktionskammer regelmäßig angeordnet sind.

13. Zelle nach einem der Ansprüche 10 bis 12, wobei die Reaktionskammer (16) nach oben durch einen Deckel (C), der mit den Eingangs-/Ausgangsanschlüssen (25, 26) versehen ist, nach unten durch die Reaktionsoberfläche (13) und seitlich durch eine Dichtung (22) begrenzt ist.

14. Zelle nach dem vorhergehenden Anspruch, wobei die Unterseite des Deckels (C) eine Umfangsnut (21) aufweist, in die ein O-Ring (22) eingesetzt ist.

15. Zelle nach den Ansprüchen 13 oder 14, wobei die Reaktionsoberfläche (13) die obere Oberfläche eines eingesetzten Teils, vorzugsweise eines Mikroskopplättchens, ist, wobei die Zelle außerdem Mittel zum Positionieren des eingesetzten Teils in Bezug auf den Deckel (C) enthält.

16. Zelle nach einem der Ansprüche 10 bis 15, die außerdem Mittel zum Regulieren der Temperatur, die in der Kammer herrscht, und/oder Mittel zum Regulieren der Temperatur, die in der Fluidschleife herrscht, enthält.

17. Zelle nach dem vorhergehenden Anspruch, wobei die Temperaturregulierungsmittel die Form wenigstens einer Zelle mit Peltier-Effekt aufweist.

18. Zelle nach einem der Ansprüche 13 bis 17, die Mittel (19) zum Verriegeln des Deckels (C) in Bezug auf die Reaktionsoberfläche (13) enthält.

19. Zelle nach einem der Ansprüche 10 bis 18, die außerdem Mittel enthält, um auf der Reaktionsoberfläche (13) fixierte Reaktanden zu detektieren.

20. Vorrichtung zum chemischen und/oder biochemischen Erkennen von "Ziel/Sonde", die wenigstens eine Zelle (3) nach einem der Ansprüche 10 bis 18 enthält, in der die Reaktionsoberfläche (13) der Zelle (3) die Form eines Mikrogitters aus spezifischen Sonden hat, das auf einem Träger, vorzugsweise einem Mikroskopplättchen, präpariert ist, wobei das Trägerfluid mehrere "Ziel"-Reaktanden enthält, die spezifisch mit den Sonden des Mikrogitters reagieren können.

21. Vorrichtung zum Bilden eines homogenen Films auf einer Oberfläche, die wenigstens eine Zelle nach einem der Ansprüche 10 bis 18 enthält.

22. Vorrichtung nach Anspruch 20 oder 21, mit:
- einer Vorrichtung zum Verteilen wenigstens eines Fluids in der Fluidschleife der Misch- und Verteilungszelle,
- Mitteln zum Einleiten wenigstens eines Trägerfluids, das den Reaktanden enthält, in die Reaktionskammer der Misch- und Verteilungszelle.

23. Vorrichtung nach einem der Ansprüche 20 bis 22, wobei mehrere Misch- und Verteilungszellen parallel und/oder in Reihe angeordnet sind.

24. Analysevorrichtung, die eine Vorrichtung nach einem der Ansprüche 20 bis 23 und Mittel zum Detektieren von auf der Reaktionsoberfläche fixierten Reaktanden enthält, wobei die Detektionsmittel mit der oder den Misch- und Verteilungszellen entweder fest verbunden oder nicht fest verbunden sind.
